# NEUE EUROPÄISCHE PATENTSCHRIFT

(11) **EP 1 741 572 B2**
(45) Veröffentlichungstag und Bekanntmachung des Hinweises auf die Entscheidung über den Einspruch: **09.12.2015**
(45) Hinweis auf die Patenterteilung: 09.03.2011
(21) Anmeldenummer: 06013793.2
(22) Anmeldetag: 04.07.2006
(51) Int. Cl.: B60D 1/54

(54) **Anhängevorrichtung**
Trailer coupling
Attelage de remorque

(30) Priorität: 07.07.2005 DE 102005032474
(43) Veröffentlichungstag der Anmeldung: 10.01.2007
(60) Teilanmeldung: 10182446.4
(73) Patentinhaber: Scambia Holdings Cyprus Limited, 3106 Limassol (CY)
(72) Erfinder: Gentner, Wolfgang, 71711 Steinheim (DE); Dreher, Martin, 71696 Möglingen (DE); Reisinger, Dieter, 71665 Vaihingen/Enz. (DE); Riehle, Jörg, 71679 Asperg (DE); Wegner, Bert, 73333 Gingen (DE)
(74) Vertreter: Hoeger, Stellrecht & Partner Patentanwälte mbB

(56) Entgegenhaltungen:
- EP-A- 1 533 149
- EP-B1- 1 040 020
- DE-B3- 10 252 722
- DE-B3- 10 252 722
- US-A- 5 356 166

## Beschreibung

Die Erfindung betrifft eine Anhängekupplung umfassend einen zwischen einer Arbeitsstellung und einer Ruhestellung bewegbaren Kugelhals mit einem an einem ersten Ende angeordneten Schwenklagerkörper und einer an einem zweiten Ende angeordneten Kupplungskugel, eine fahrzeugfest angeordnete Schwenklagereinheit, in welcher der Schwenklagerkörper um eine Schwenkachse zwischen der Arbeitsstellung und der Ruhestellung verschwenkbar aufgenommen ist, und eine Drehblockiereinrichtung mit mindestens einem Drehblockierkörper, der in einer Führungsrichtung mit mindestens einer Komponente in radialer Richtung zur Schwenkachse bewegbar ist, wobei der Drehblockierkörper durch Bewegung in der Führungsrichtung mit einer am Schwenklagerkörper angeordneten Aufnahme in Eingriff bringbar ist, um damit in einer Blockierstellung die freie Drehbarkeit des Schwenklagerkörpers zu unterbinden, und außer Eingriff bringbar ist, um in einer Lösestellung die ungehinderte freie Drehbarkeit des Schwenklagerkörpers um die Schwenkachse freizugeben, und mit einem eine quer zur Führungsrichtung verlaufende Keilfläche aufweisenden und in einer Betätigungsrichtung bewegbaren Betätigungskörper, durch dessen Bewegung in der Betätigungsrichtung der mindestens eine Drehblockierkörper in der Führungsrichtung bewegbar und beaufschlagbar ist.

Eine derartige Anhängekupplung ist aus der EP 1 040 020 A1 bekannt.

Aus der EP 1 533 149 A1 ist ferner eine Anhängekupplung bekannt, bei welcher ein Blockieren der Schwenkbewegung des Kugelhalses durch Aufsetzen eines Kugelstangenlagerkopfes auf ein Gegenstück erfolgt und ein Lösen der Blockierung durch Abheben von dem Gegenstück. Das Abheben des Kugelstangenlagerkopfes von dem Gegenstück wird durch eine Rastvorrichtung verhindert, die als Rastmittel von einem Sperrbolzen beaufschlagbare Kugeln aufweist, welche zum Verrasten in eine Aufnahme am Kugelstangenlagerkopf eingreifen können.

Der Erfindung liegt ausgehend von der EP 1 040 020 A1 die Aufgabe zugrunde, eine möglichst einfach aufgebaute Anhängekupplung zu schaffen.

Diese Aufgabe wird bei einer Anhängekupplung der eingangs beschriebenen Art erfindungsgemäß durch die Merkmale des Anspruchs 1 gelöst.

Der Vorteil der erfindungsgemäßen Lösung ist darin zu sehen, dass dadurch eine einfache Möglichkeit geschaffen ist, eine Drehblockierung zu erreichen, die hohen Belastungen des Kugelhalses Stand hält.

Noch vorteilhafter ist es, wenn die Drehblockiereinrichtung mindestens drei Drehblockierkörper umfasst.

Eine besonders günstige Lösung sieht vor, dass die Drehblockierkörper derart relativ zum Betätigungskörper angeordnet sind, dass sich mindestens deren quer zur Schwenkachse gerichtete und auf den Betätigungskörper wirkende Reaktionskräfte zumindest zum Teil kompensieren.

Bei einer derartigen Lösung besteht somit der Vorteil, dass der Betätigungskörper nicht so konzipiert sein muss, dass dieser zur Aufnahme der von den Drehblockierkörpern auf diesen wirkenden Reaktionskräfte stabil gelagert sein muss, sondern sehr einfach gelagert werden kann, wenn sich die von den Drehblockierkörpern auf den Betätigungskörper wirkenden Reaktionskräfte zumindest zum Teil aufheben.

Besonders vorteilhaft ist es dabei, wenn die Drehblockierkörper relativ zum Betätigungskörper derart angeordnet sind, dass sich mindestens deren quer zur Schwenkachse gerichteten und auf den Betätigungskörper wirkende Reaktionskräfte im Wesentlichen aufheben.

Besonders vorteilhaft ist es, wenn die Drehblockierkörper relativ zum Betätigungskörper derart angeordnet sind, dass sich deren auf den Betätigungskörper wirkenden Reaktionskräfte zumindest zum Teil aufheben.

Grundsätzlich können dabei die Drehblockierkörper relativ zum Betätigungskörper in beliebiger Weise angeordnet sein.

Ein Ausführungsbeispiel sieht dabei vor, dass die Drehblockierkörper um den Betätigungskörper herum angeordnet sind. Mit einer derartigen Lösung ist einerseits eine raumsparende Anordnung der Drehblockierkörper möglich und andererseits eine zumindest teilweise Kompensation der auf den Betätigungskörper wirkenden Reaktionskräfte.

Besonders günstig ist eine derartige Anordnung dann, wenn die Drehblockierkörper im Wesentlichen symmetrisch zu einer senkrecht zur Schwenkachse verlaufenden Ebene angeordnet sind.

Um eine möglichst spielfreie Drehfixierung des Schwenklagerkörpers zu erreichen, ist vorzugsweise vorgesehen, dass mindestens zwei der Drehblockierkörper mit den für diese vorgesehenen Aufnahmen derart zusammenwirken, dass diese einander entgegengesetzt wirkende Drehmomente auf den Schwenklagerkörper erzeugen.

Aufgrund dieser zwei entgegengesetzt zueinander wirkenden Drehmomente besteht die Möglichkeit, den Schwenklagerkörper spielfrei durch die Schwenklagereinheit zu fixieren.

Im Hinblick auf die Bewegungen des Betätigungskörpers zum Bewegen der Drehblockierkörper wurden bislang keine näheren Angaben gemacht.

Alternativ oder ergänzend zu den bislang beschriebenen Ausführungsbeispielen wird die eingangs genannte Aufgabe durch die Merkmale des Anspruchs 8 gelöst.

Alternativ oder ergänzend zu den bislang beschriebenen Ausführungsbeispielen wird die eingangs genannte Aufgabe durch die Merkmale des Anspruchs 9 gelöst.

Besonders günstig ist es dabei, wenn der Betätigungskörper sich über einen Winkelbereich um die Schwenkachse erstreckende und in ihrem radialen Abstand zur Schwenkachse variierende Keilflächen aufweist, mit denen die Drehblockierkörper beaufschlagbar sind.

Darüber hinaus wurden im Zusammenhang mit der bisherigen Beschreibung der erfindungsgemäßen Lösung keine Angaben darüber gemacht, wie die Drehblockierkörper ihrerseits in der Führungsrichtung geführt sein sollen.

Beispielsweise wäre es denkbar, den Drehblockierkörper durch eine Führungsaufnahme in dem Schwenklagerkörper zu führen und stationäre Aufnahmen vorzusehen, mit denen der mindestens eine Drehblockierkörper in Eingriff oder außer Eingriff bringbar ist.

Alternativ oder ergänzend zu den bislang beschriebenen Ausführungsbeispielen wird die eingangs genannte Aufgabe durch die Merkmale des Anspruchs 11 gelöst.

Vorzugsweise ist dabei der Führungskörper so ausgebildet, dass er eine Führungshülse mit der Führungsaufnahme für den jeweiligen Drehblockierkörper aufweist.

Ein derart vorgesehener Führungskörper lässt sich vorteilhaft insbesondere auch dazu einsetzen, dass mit dem Führungskörper ein Lager für den Betätigungskörper verbunden ist, so dass dadurch der Betätigungskörper in einfacher Weise und günstig gelagert werden kann.

Hinsichtlich der Lagerung des Schwenklagerkörpers selbst in der Schwenklagereinheit wurden bislang ebenfalls keine näheren Angaben gemacht.

So sieht insbesondere eine günstige Lösung vor, dass der Führungskörper ein Schwenklager für den Schwenklagerkörper bildet, so dass der Führungskörper dabei zusätzlich zu der Führungsfunktion noch den Vorteil bietet, die Lagerfunktion für den Schwenkkörper zu übernehmen.

Zweckmäßigerweise ist dabei der Führungskörper so angeordnet, dass er Teil der fahrzeugfest angeordneten Schwenklagereinheit ist.

Im Rahmen der erfindungsgemäßen Lösung sind unterschiedliche Möglichkeiten der relativen Anordnung von Führungskörper, Schwenklagerkörper und Betätigungskörper denkbar.

So wäre eine Lösung denkbar, bei welcher der Betätigungskörper den Führungskörper umschließt und der Schwenklagerkörper vom Führungskörper umschlossen ist, das heißt in den Führungskörper hineingreift.

Eine weitere vorteilhafte Lösung sieht jedoch vor, dass der Betätigungskörper von dem Führungskörper umschlossen ist und dass der Schwenklagerkörper den Führungskörper umgreift.

Hinsichtlich einer möglichst einfachen Konstruktion wird alternativ oder erganzend zu den bislang beschriebenen Ausführungsbeispielen die eingangs genannte Aufgabe bei einer Anhängekupplung der eingangs beschriebenen Art alternativ oder ergänzend durch der Merkmale des Anspruchs 18 gelöst.

Eine derartige Anordnung des Schwenklagerkörpers hat einerseits den Vorteil eines günstigen räumlichen Aufbaus der Schwenklagereinheit selbst und den Vorteil einer relativ einfachen Abdichtung der Schwenklagereinheit, da der Schwenklagerkörper keine Bewegungen in axialer Richtung der Schwenkachse durchführt.

Vorzugsweise sind zwischen einem Gehäuse der Schwenklagereinheit und beiden Endseiten des Außenkörpers um die Schwenkachse umlaufende Dichtungen vorgesehen, mit welchen eine Abdichtung gegen eindringenden Schmutz und Feuchtigkeit erfolgt.

Hinsichtlich der Stabilität und auch des geringen Raumbedarfs der erfindungsgemäßen Anhängekupplung sieht ein besonders günstiges Ausführungsbeispiel vor, dass das erste Ende des Kugelhalses an dem Außenkörper angesetzt ist.

Damit lässt sich eine besonders einfache und stabile Verbindung zwischen dem Schwenklagerkörper und dem Kugelhals schaffen, ebenfalls ohne den Raumbedarf zu erhöhen.

Vorzugsweise ist dabei der Betätigungskörper so ausgebildet, dass er in einer inaktiven Stellung die Lösestellung der Drehblockierkörper zulässt.

Ferner sieht eine weitere Ausbildung des Drehblockierkörpers vor, dass dieser in einer aktiven Stellung die Drehblockierkörper in ihrer Blockierstellung hält.

Um nun sicherzustellen, dass die Drehblockierkörper stets in ihre Blockierstellung übergehen, insbesondere dann, wenn keine Betätigung des Betätigungskörpers erfolgt, ist vorzugsweise vorgesehen, dass der Betätigungskörper durch einen elastischen Kraftspeicher in Richtung seiner aktiven Stellung beaufschlagt ist.

Um den Betätigungskörper in geeigneter Weise betätigen zu können, ist vorzugsweise eine Betätigungsvorrichtung vorgesehen, mittels welcher der Betätigungskörper von der aktiven in die inaktive Stellung bewegbar ist.

Günstigerweise ist dabei die Betätigungsvorrichtung so ausgebildet, dass mit dieser der Betätigungskörper entgegen der Beaufschlagung durch den Kraftspeicher bewegbar ist.

Im Fall eines drehbar vorgesehenen Betätigungskörpers, ist vorgesehen, dass mit der Betätigungsvorrichtung der Betätigungskörper entgegengesetzt zur durch den Kraftspeicher bewirkten Drehrichtung verdrehbar ist.

Hinsichtlich der Ausbildung der Betätigungsvorrichtung wurden bislang keine näheren Angaben gemacht. So sieht eine vorteilhafte Lösung vor, dass die Betätigungsvorrichtung ein Antriebselement aufweist, welches mit dem Betätigungskörper gekoppelt ist.

Eine derartige Kopplung zwischen dem Antriebselement und dem Betätigungskörper kann in unterschiedlichster Art und Weise ausgebildet sein. Eine Lösung wäre eine direkte Verbindung zwischen dem Antriebselement und dem Betätigungskörper.

Besonders vorteilhaft ist es jedoch, wenn das Antriebselement und der Betätigungskörper über eine Mitnahmekopplungseinrichtung miteinander gekoppelt sind.

Eine derartige Mitnahmekopplungseinrichtung kann in unterschiedlichster Art und Weise ausgebildet sein. Eine vorteilhafte Ausführungsform sieht vor, dass die Mitnahmekopplungseinrichtung einen mitnahmefreien Freigangzustand und einen Mitnahmezustand aufweist.

Eine Ausführungsform einer erfindungsgemäßen Anhängekupplung sieht vor, dass die Mitnahmekopplungseinrichtung so ausgebildet ist, dass ein Bewegen des Antriebselements ausgehend von einer Ausgangsstellung erst nach Durchlaufen eines Freigangzustandes und Erreichen des Mitnahmezustandes in einer Zwischenstellung eine Bewegung des Betätigungskörpers bewirkt.

Um auch ohne Einwirkung auf die Betätigungsvorrichtung diese stets in einem definierten Zustand zu halten, ist vorgesehen, dass die Betätigungsvorrichtung so ausgebildet ist, dass diese selbstständig in eine Ausgangsstellung übergeht.

Dies lässt sich besonders günstig dann realisieren, wenn das Antriebselement der Betätigungsvorrichtung durch einen elastischen Kraftspeicher in Richtung seiner Ausgangsstellung beaufschlagt ist.

Im Zusammenhang mit der bisherigen Erläuterung der einzelnen Ausführungsbeispiele wurde nicht darauf eingegangen, wie eine zuverlässige Sicherung der aktiven Stellung des Betätigungskörpers erreicht werden soll.

Eine besonders vorteilhafte Lösung sieht daher vor, dass der Betätigungskörper durch eine Sicherungseinrichtung blockierbar ist.

Besonders vorteilhaft ist eine Lösung, bei welcher der Betätigungskörper durch die Sicherungseinrichtung gegen ein Erreichen seiner inaktiven Stellung blockierbar ist, um sicherzustellen, dass der Betätigungskörper niemals selbstständig, beispielsweise bei einem Bruch des diesen in Richtung seiner aktiven Stellung beaufschlagenden elastischen Kraftspeichers, die Lösestellung der Drehblockierkörper zulässt.

Eine derartige Sicherungseinrichtung ist so ausgebildet, dass diese eine Einwirkung erfordert, um die Blockierung des Betätigungskörpers aufzuheben.

Aus diesem Grund ist zweckmäßigerweise vorgesehen, dass die Betätigungsvorrichtung mit der Sicherungseinrichtung gekoppelt ist, so dass über die Betätigungsvorrichtung auch ein Lösen der Blockierung des Betätigungskörpers durch die Sicherungseinrichtung aufgehoben werden kann.

Vorzugsweise ist dabei die Sicherungseinrichtung derart mit der Betätigungsvorrichtung gekoppelt, dass die Sicherungseinrichtung eine nicht durch eine Betätigung ausgelöste Bewegung des Betätigungskörpers blockiert.

Insbesondere ist die Sicherungseinrichtung so ausgebildet, dass sie bei nichtbetätigter Betätigungsvorrichtung eine Bewegung des Betätigungskörpers in seine inaktive Stellung blockiert.

Eine zweckmäßige Lösung sieht dabei vor, dass das Antriebselement der Betätigungsvorrichtung mit der Sicherungseinrichtung gekoppelt ist.

Zweckmäßigerweise lässt sich dabei das Antriebselement derart ausbilden, dass über das Antriebselement die Einwirkung auf den Betätigungskörper und die Einwirkung auf die Sicherungseinrichtung aufeinander abgestimmt sind, so dass eine Betätigung der Betätigungsvorrichtung einerseits dazu führt, dass die Blockierung des Betätigungskörpers aufgehoben wird und andererseits dazu führt, dass der Betätigungskörper von der aktiven Stellung in die inaktive Stellung bewegt wird.

Beispielsweise ist hierzu vorgesehen, dass das Antriebselement im Zuge seiner Bewegung von der Ausgangsstellung in eine Zwischenstellung die Sicherungseinrichtung von der Sicherungsstellung in die Entsicherungsstellung überführt.

Hinsichtlich der Kopplung zwischen dem Antriebselement und der Sicherungseinrichtung sind die unterschiedlichsten Möglichkeiten denkbar.

Beispielsweise wäre jede Art von Kopplung, beispielsweise auch über eine elektrische Steuerung denkbar.

Eine aufgrund ihrer Einfachheit besonders zweckmäßige Lösung sieht dabei vor, dass das Antriebselement und die Sicherungseinrichtung über eine mechanische Kopplungseinrichtung miteinander gekoppelt sind.

Die mechanische Kopplungseinrichtung ist günstigerweise so ausgebildet, dass sie mittels einer Kulissenbahn die Einwirkung auf die Sicherungseinrichtung steuert.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Draufsicht auf ein erstes Ausführungsbeispiel einer erfindungsgemäßen Anhängekupplung mit Blick in Fahrtrichtung auf die an einem Fahrzeugheck montierte Anhängekupplung, wobei die Anhängekupplung in ihrer Arbeitsstellung steht;
- Fig. 2: eine Ansicht entsprechend Fig. 1 der in der Ruhestellung stehenden Anhängekupplung;
- Fig. 3: eine Ansicht in Richtung des Pfeils X in Fig. 1;
- Fig. 4: einen Teilschnitt längs einer durch die Schwenkachse sowie einen der Drehblockierkörper hindurchverlaufenden Schnittebene in einer Blockierstellung der Drehblockierelemente und einer aktiven Stellung eines Betätigungskörpers;
- Fig. 5: einen Schnitt längs Linie 5-5 in Fig. 4;
- Fig. 6: eine Darstellung ähnlich Fig. 4 bei in Lösestellung stehendem Drehblockierkörper und in inaktiver Stellung stehendem Betätigungskörper;
- Fig. 7: einen Schnitt entsprechend Fig. 5 bei der Stellung der Drehblockierkörper und des Betätigungskörpers in Fig. 6;
- Fig. 8: einen Schnitt entsprechend Fig. 4 bei in einer Blockierstellung stehendem Drehblockierelement, jedoch ohne spielfreie Fixierung des Schwenklagerkörpers;
- Fig. 9: einen Schnitt entsprechend Fig. 5 bei der in Fig. 8 dargestellten Stellung der Drehblockierkörper;
- Fig. 10: einen vergrößerten Schnitt entsprechend Fig. 5 bei drehfester Blockierung des Schwenklagerkörpers mittels der Drehblockierkörper;
- Fig. 11: eine ausschnittsweise vergrößerte Darstellung des Drehblockierelements 54b;
- Fig. 12: eine ausschnittsweise vergrößerte Darstellung des Drehblockierelements 54c;
- Fig. 13: eine ausschnittsweise vergrößerte Darstellung des Drehblockierelements 54a;
- Fig. 14: einen Schnitt längs Linie 14-14 in Fig. 17,
- Fig. 15: eine ausschnittsweise perspektivische Darstellung ähnlich Fig. 3 mit Darstellung einer Betätigungsvorrichtung und einer Sicherungseinrichtung in einer Ausgangsstellung der Betätigungsvorrichtung und einer Sicherungsstellung der Sicherungseinrichtung;
- Fig. 16: eine Draufsicht in Richtung des Pfeils Y in Fig. 15 in einer Ausgangsstellung der Betätigungsvorrichtung und einer Sicherungsstellung der Sicherungseinrichtung;
- Fig. 17: eine Draufsicht ähnlich Fig. 16 in einer Schnittebene längs Linie 17-17 in Fig. 18 in einer Ausgangsstellung der Betätigungsvorrichtung und einer Sicherungsstellung der Sicherungseinrichtung;
- Fig. 18: einen Schnitt längs Linie 18-18 in Fig. 16
- Fig. 19: eine perspektivische Darstellung ähnlich Fig. 15 in einer Zwischenstellung der Betätigungsvorrichtung und einer Entsicherungsstellung der Sicherungseinrichtung;
- Fig. 20: eine Draufsicht entsprechend Fig. 17 in der Zwischenstellung gemäß Fig. 19;
- Fig. 21: eine perspektivische Darstellung ähnlich Fig. 15 in einer Betätigungsstellung der Betätigungsvorrichtung und einer Entsicherungsstellung der Sicherungseinrichtung;
- Fig. 22: eine Draufsicht ähnlich Fig. 16 in der Betätigungsstellung der Betätigungsvorrichtung;
- Fig. 23: eine Draufsicht ähnlich Fig. 17 in der Betätigungsstellung der Betätigungsvorrichtung;
- Fig. 24: einen Schnitt entsprechend Fig. 18 in der Betätigungsstellung der Betätigungsvorrichtung;
- Fig. 25: einen Schnitt ähnlich Fig. 5 durch ein zweites Ausführungsbeispiel einer erfindungsgemäßen Anhängekupplung;
- Fig. 26: einen Schnitt ähnlich Fig. 4 durch ein drittes Ausführungsbeispiel einer erfindungsgemäßen Anhängekupplung und
- Fig. 27: einen Schnitt ähnlich Fig. 6 durch das dritte Ausführungsbeispiel der erfindungsgemäßen Anhängekupplung.

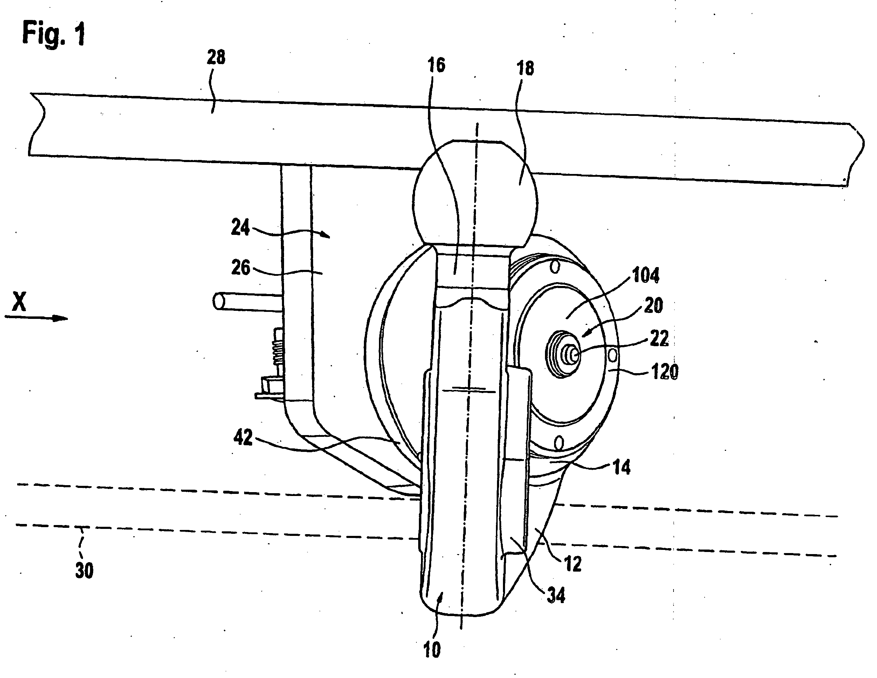

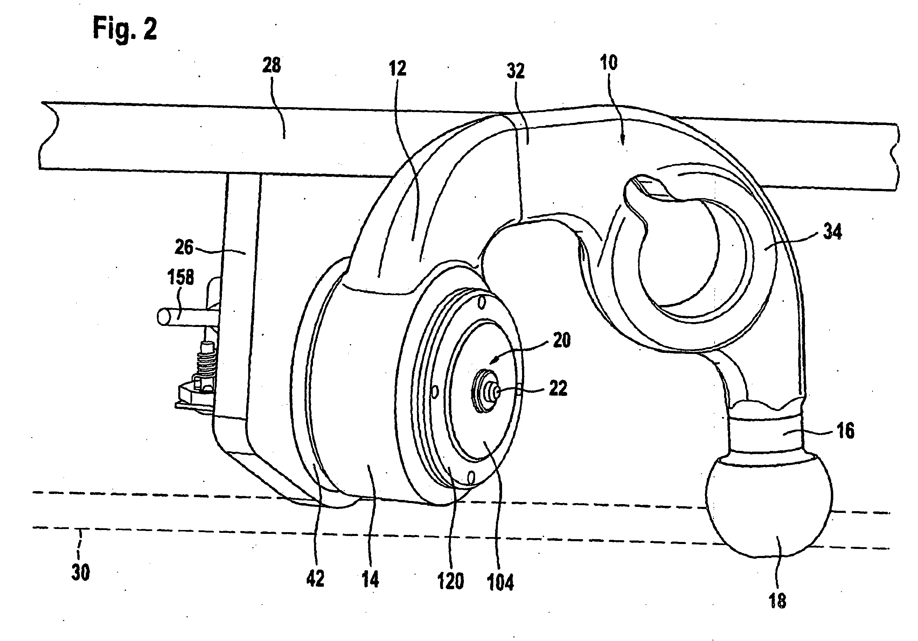

Ein erstes Ausführungsbeispiel einer erfindungsgemäßen Anhängekupplung, dargestellt in Fig. 1 in einer Arbeitsstellung A und in Fig. 2 in einer Ruhestellung R, umfasst einen als Ganzes mit 10 bezeichneten Kugelhals, welcher mit einem ersten Ende 12 an einem Schwenklagerkörper 14 gehalten ist und an einem zweiten Ende 16 eine als Ganzes mit 18 bezeichnete Kupplungskugel trägt, an welcher eine Kupplungskugelaufnahme eines Anhängers fixierbar ist.

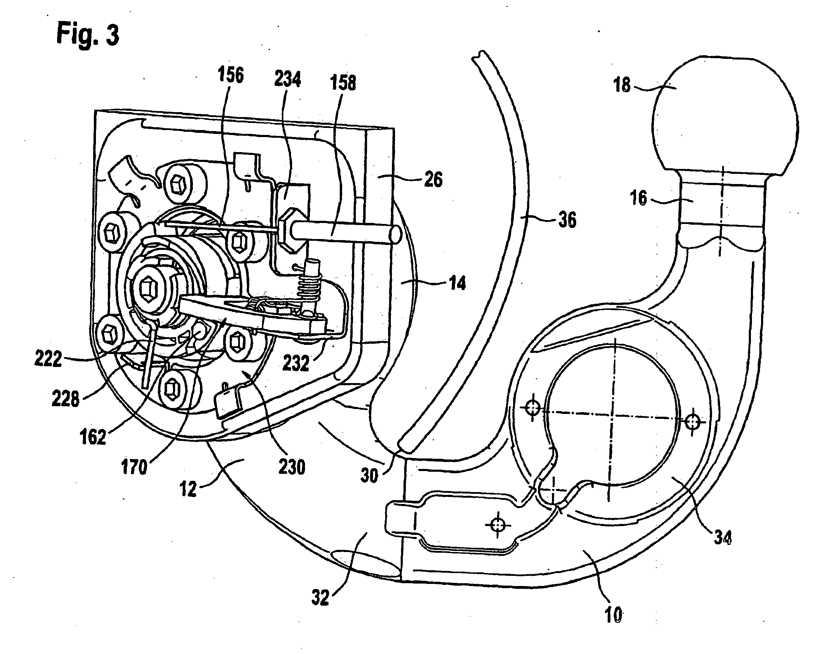

Der Schwenklagerkörper 14 ist durch eine als Ganzes mit 20 bezeichnete Schwenklagereinheit um eine Schwenkachse 22 relativ zu einem fahrzeugfesten Träger 24 schwenkbar gelagert, wobei der Träger 24 vorzugsweise eine die Schwenklagereinheit 20 haltende Tragplatte 26 aufweist, welche sich vorzugsweise in einer zur Schwenkachse 22 senkrechten Ebene erstreckt, und einen fahrzeugfesten Querträger 28 aufweist, welcher in bekannter Weise heckseitig einer Fahrzeugkarosserie befestigbar ist, und zwar so, dass die Schwenklagereinheit 20 und der Träger 24 auf einer einer Fahrbahnoberfläche abgewandten Seite einer Unterkante 30 einer Stoßfängereinheit 36 liegen, und durch die Stoßfängereinheit 36 abgedeckt sind (Fig. 3).

In der in Fig. 1 dargestellten Arbeitsstellung untergreift der Kugelhals 10 mit einem sich an das erste Ende 12 anschließenden Abschnitt 32 die Unterkante 30 der Stoßfängereinheit 36, so dass das zweite Ende 16 und die Kupplungskugel 18 mitsamt einer Steckdosenaufnahme 34 auf einer der Fahrzeugkarosserie abgewandten Seite der hinteren Stoßfängereinheit 36 stehen, während in der Ruhestellung sowohl die Schwenklagereinheit 20 als auch der gesamte Kugelhals 10 mitsamt der Kupplungskugel 18 von der hinteren Stoßfängereinheit 36 gegen Sicht von hinten abgedeckt sind.

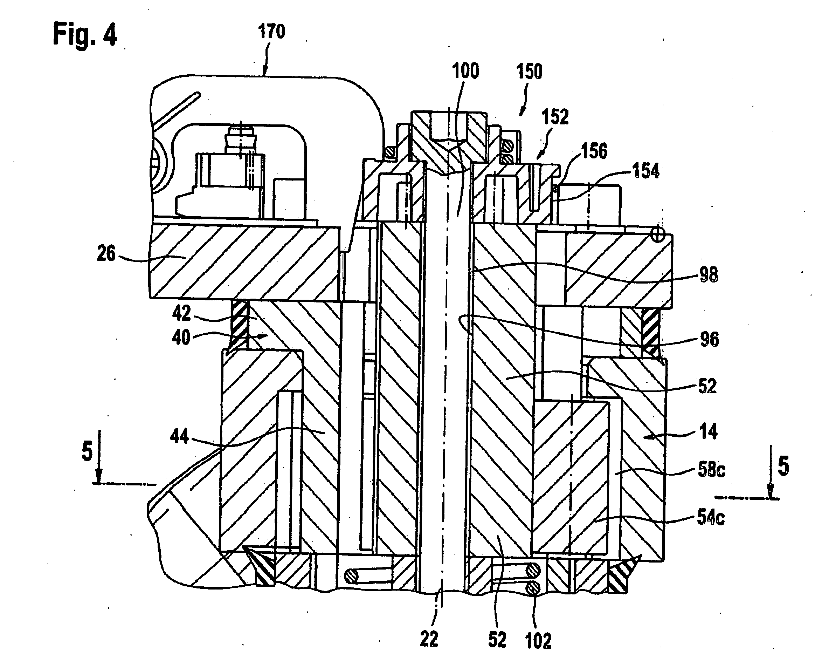

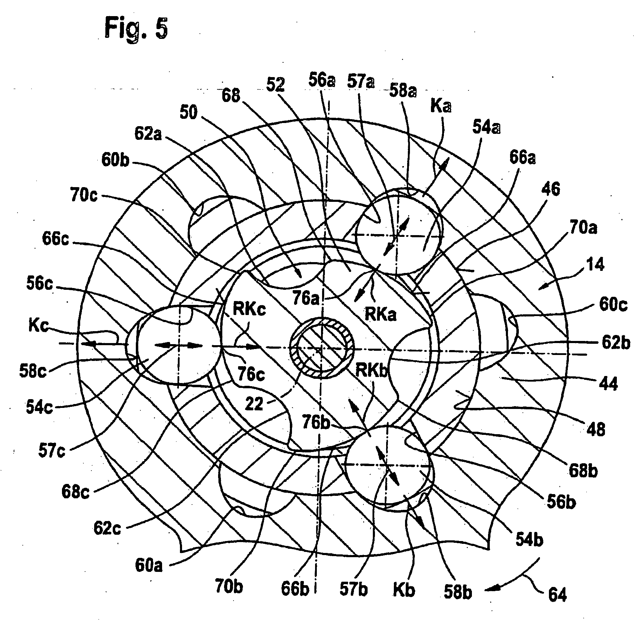

Die Schwenklagereinheit 20 umfasst, wie in Fig. 4 und 5 dargestellt, einen Führungskörper 40, welcher mit einem Flansch 42 fest mit der Tragplatte 26 verbunden ist und eine sich ausgehend von dem Flansch 42 von der Tragplatte 26 weg erstreckende Führungshülse 44, auf welcher der Schwenklagerkörper 14 drehbar gelagert ist. Hierzu umfasst die Führungshülse 44 eine zylindrische Außenmantelfläche 46, auf welcher der Schwenklagerkörper 14 mit einer zylindrischen Innenfläche 48 aufliegt und dadurch um die Schwenkachse 22 eine Drehführung um die Achse 22 erfährt, so dass der Schwenklagerkörper 14 derart relativ zum Führungskörper 40 drehbar ist, dass der Kugelhals 10 von der Arbeitsstellung A in die Ruhestellung R und umgekehrt verschwenkbar ist.

Der Führungskörper 40 bildet somit durch seine feste Verbindung mit der Trägerplatte 26 und dem Träger 24 die fahrzeugfeste Drehlagerung für den Schwenklagerkörper 14.

Zur Fixierung des Schwenklagerkörpers 14 in der Arbeitsstellung A und der Ruhestellung R ist die Schwenklagereinheit 20 mit einer als Ganzes mit 50 bezeichneten Drehblockiereinrichtung versehen, welche einen Betätigungskörper 52, mehrere durch den Betätigungskörper 52 beaufschlagbare Drehblockierkörper 54, welche in Führungsaufnahmen 56 der Führungshülse 44 in einer im Wesentlichen radial zur Schwenkachse 22 verlaufenden Führungsrichtung 57 bewegbar geführt sind, sowie sich ausgehend von der Innenfläche 48 des Schwenklagerkörpers 14 in diesen hineinerstreckende erste Aufnahmen 58 und zweite Aufnahmen 60, mit denen die Drehblockierkörper in der Arbeitsstellung A bzw. in der Ruhestellung R in Eingriff bringbar sind, wobei die Aufnahmen 58, 60 in radialer Richtung zur Schwenkachse 22 zunehmen einen geringeren Abstand voneinander aufweisende Wandflächen 59, 61 haben.

Umfasst beispielsweise die Drehblockiereinrichtung 50, wie im Zusammenhang mit Fig. 4 und Fig. 5 beim ersten Ausführungsbeispiel dargestellt, einen Satz von drei Drehblockierkörpern 54a, 54b und 54c, so weist die Führungshülse 44 einen Satz von drei Führungsaufnahmen 56a, 56b und 56c auf, in welchen die Drehblockierkörper 54a, 54b und 54c in der im Wesentlichen radial zur Schwenkachse 22 verlaufenden Führungsrichtung 57 verschiebbar geführt sind, und der Schwenklagerkörper 14 ist mit einem Satz von ersten Aufnahmen 58a, 58b und 58c versehen, mit welchen die Drehblockierkörper 54a, 54b und 54c in der Arbeitsstellung A in Eingriff bringbar sind und mit einem Satz von zweiten Aufnahmen 60a, 60b und 60c versehen, mit welchen die Drehblockierkörper 54a, 54b und 54c in der Ruhestellung R in Eingriff bringbar sind.

Zum geeigneten Bewegen und Positionieren der Drehblockierkörper 54 in der Führungsrichtung 57 ist der Betätigungskörper 52 mit einem Satz von insgesamt drei Rückzugsaufnahmen 62a, 62b und 62c und drei sich in einer Umlaufrichtung 64 an die Rückzugsaufnahmen 62a, 62b, 62c anschließenden Druckflächen 66a, 66b und 66c versehen, wobei die Drehblockierkörper 54 in ihrer Lösestellung in die Rückzugsaufnahmen 62a, 62b, 62c soweit eintauchen können, dass sie nicht mehr über die Außenmantelfläche 46 der Führungshülse 44 überstehen, und wobei sich die Druckflächen 66a, 66b, 66c jeweils von einem sich unmittelbar an die jeweilige Rückzugsaufnahmen 62 anschließenden radial innenliegenden Anfangsbereich 68a, 68b und 68c mit zunehmender Erstreckung in der Umlaufrichtung 64 zunehmend radial zur Schwenkachse 22 nach außen erstrecken, bis zu jeweils einem radial außenliegenden Endbereich 70a, 70b und 70c und somit als bei einer Drehbewegung des Betätigungskörpers 52 als Keilflächen auf die Drehblockierkörper 54 wirken, um diese in ihre Blockierstellung zu bewegen.

Vorzugsweise verlaufen dabei die Druckflächen 66 als Spiral- oder Evolventensegmente relativ zur Schwenkachse 22.

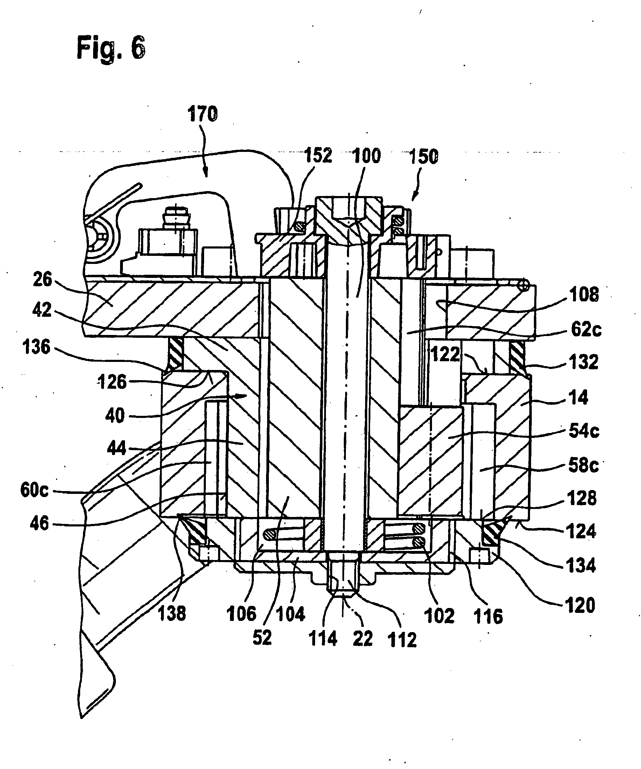

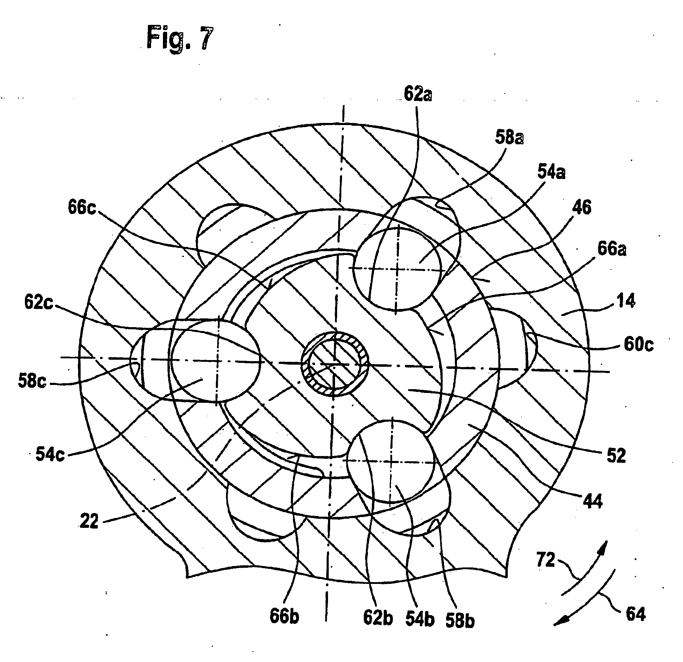

Um die Drehblockierkörper 54 entweder in ihrer Blockierstellung durch Beaufschlagen derselben mit den Druckflächen 66 zwischen dem Anfangsbereich 68 und dem Endbereich 70 zu halten oder in der Lösestellung in die Rückzugsaufnahme 62 eintauchen zu lassen, ist der Betätigungskörper 52 ebenfalls um die Schwenkachse 22, insbesondere koaxial zu dieser, drehbar und zwar so, dass entweder der Satz von Rückzugsaufnahmen 62a, 62b und 62c den Drehblockierkörpern 54 zugewandt ist und diesen, wie in Fig. 6 und 7 dargestellt, in seiner inaktiven Stellung die Möglichkeit gibt, in die Rückzugsaufnahmen 62 in radialer Richtung zur Schwenkachse 22 hin einzutauchen um den jeweiligen Drehblockierkörpern 54 die Möglichkeit zu eröffnen, die ersten Aufnahmen 58 oder die zweiten Aufnahmen 60 hinsichtlich einer Drehung mitsamt dem Schwenklagerkörper 14 um die Schwenkachse 22 freizugeben, so dass der Schwenklagerkörper 14 mit dem Kugelhals 10 relativ zur Führungshülse 44 ungehindert und frei drehbar ist, wie in Fig. 6 und 7 dargestellt, wobei in diesem Fall die Drehblockierkörper 54 sich nicht über die Außenmantelfläche 46 der Führungshülse 44 hinaus erstrecken.

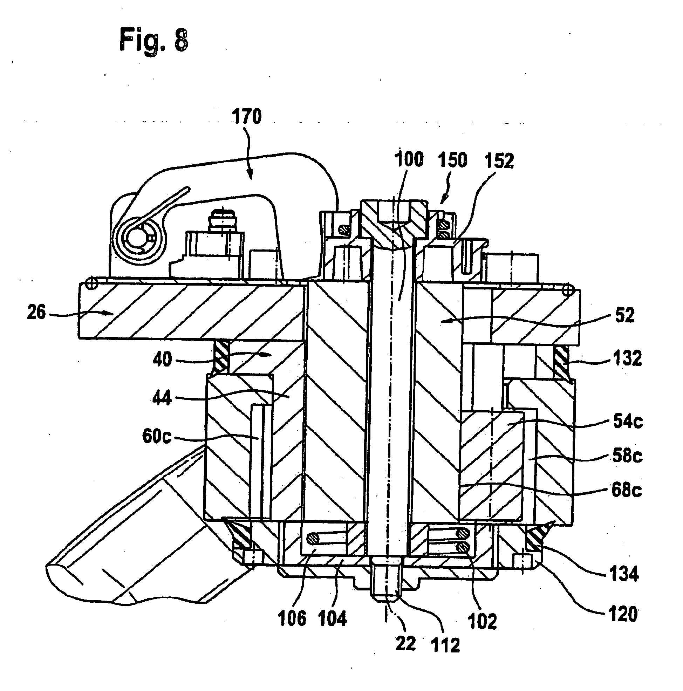

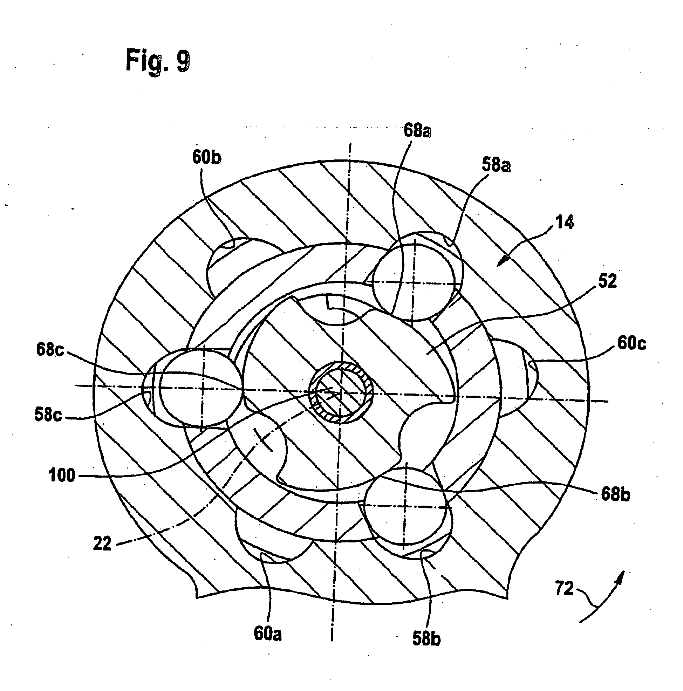

Eine Drehung des Betätigungskörpers 52 bei in den Rückzugsaufnahmen 62 sitzenden Drehblockierkörper 54 in einer Drehrichtung 72 entgegengesetzt zur Umlaufrichtung 64 bewirkt, dass die Drehblockierkörper 54 aus den Rückzugsaufnahmen 62 heraus bewegt werden und zunächst, wie in Fig. 8 und 9 dargestellt, in der aktiven Stellung des Betätigungskörpers 52 auf den Anfangsbereichen 68 der Druckflächen 66 aufsitzen, dabei jedoch beispielsweise in die ersten Aufnahmen 58 eintauchen und damit die freie Drehbarkeit des Schwenklagerkörpers 14 unterbinden.

Wird der Betätigungskörper 52 in der Drehrichtung 72 entgegengesetzt zur Umlaufrichtung 64 weitergedreht, so wirken immer weiter radial gegenüber der Schwenkachse 22 außen liegenden Bereiche der Druckflächen 66 auf die Drehblockierkörper 54 und drücken somit die Drehblockierkörper 54 zunehmend beispielsweise in der Arbeitsstellung A des Kugelhalses 10 in die ersten Aufnahmen 58a, 58b und 58c hinein, um somit eine im Wesentlichen spielfreie Fixierung des Schwenklagerkörpers 14 relativ zum Führungskörper 40, in diesem Fall zur Führungshülse 44, zu erreichen. In dieser Blockierstellung der Drehblockierkörper 54 steht der Betätigungskörper 52 in seiner aktiven Stellung so, dass die Drehblockierkörper 54, wie in Fig. 4 und 5 dargestellt, ungefähr auf Mittelbereichen 76, die zwischen den Anfangsbereichen 68 und den Endbereichen 70 liegen, der Druckflächen 66 aufsitzen und von diesen beaufschlagt werden.

Die spielfreie Verriegelung des Schwenklagerkörpers 14 durch die Drehblockierkörper 54 lässt sich besonders günstig dann erreichen, wenn der Drehblockierkörper 54 und die Aufnahmen 58 und 60 so gestaltet sind, dass bei zunehmendem Eintauchen eines der Drehblockierkörper 54 in eine der Aufnahmen 58 oder 60 und Anliegen der Drehblockierkörper 54 an einer Seite der Aufnahmen 58 und 60 eine Verdrehung des Schwenklagerkörpers 14 bewirken und der Satz von Drehblockierkörpern 54a bis 54c zur spielfreien Fixierung des Schwenklagerkörpers 14 mit in entgegengesetzten Richtungen wirkenden Drehmomenten 90, 92 auf die Aufnahmen 58 oder 60 einwirkt.

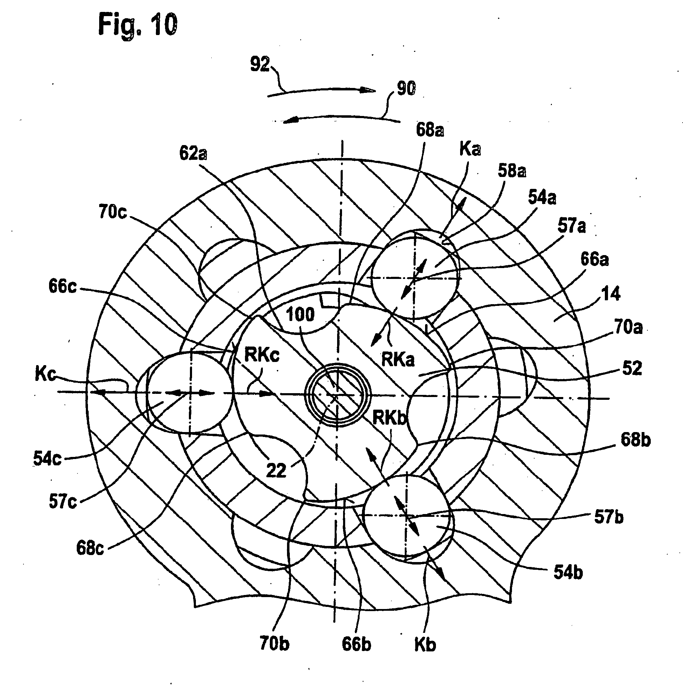

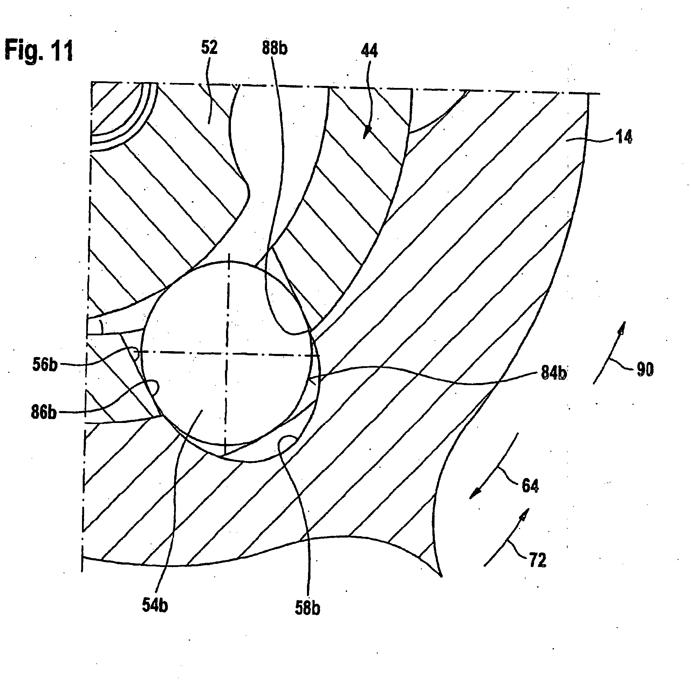

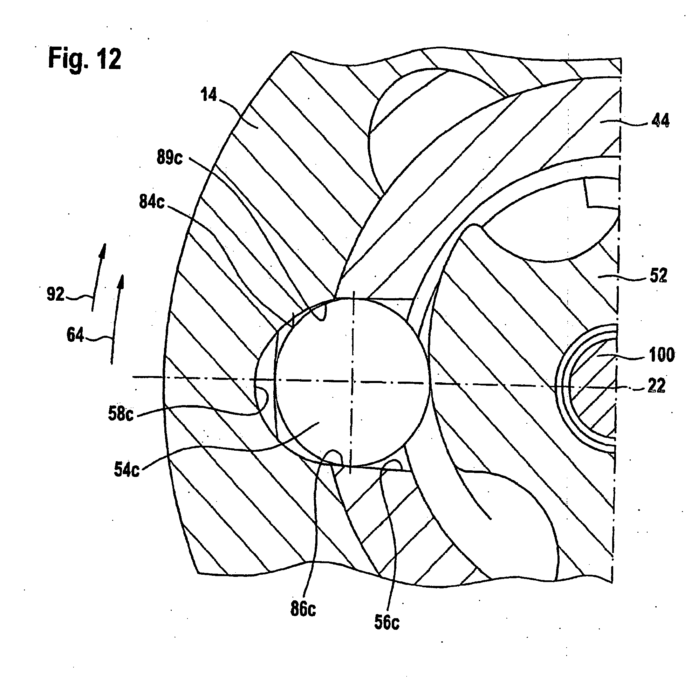

Wie beispielsweise in Fig. 10 bis 13 dargestellt, liegt der Drehblockierkörper 54b mit seiner Mantelfläche 84b nur auf einer Seite 86b der Führungsaufnahme 56b an, beispielsweise der in Umlaufrichtung 64 liegenden Seite, und stützt sich mit einem gegenüberliegenden Bereich seiner Mantelfläche 84b auf einer entgegengesetzt zur Umlaufrichtung 64 liegenden Seite 88b der Aufnahme 58b ab, wobei eine zunehmende Bewegung des Drehblockierkörpers 54 in radialer Richtung zur Schwenkachse 22 zu einem entgegengesetzt zur Umlaufrichtung 64 wirkenden Drehmoment 90 führt, welches auf den Schwenklagerkörper 14 wirkt.

Ferner liegt der Drehblockierkörper 54c mit seiner Mantelfläche 84c an einer entgegengesetzt zur Umlaufrichtung liegenden Seite 86c der Führungsaufnahme 56c an und wirkt mit einem gegenüberliegenden Bereich der Mantelfläche 84c auf eine Seite 89c der ersten Aufnahme 58c, wodurch ein in Umlaufrichtung 64 wirkendes Drehmoment 92 entsteht, welches auf den Schwenklagerkörper 14 wirkt.

Somit wirken die durch die Drehblockierkörper 54b und 54c erzeugten Drehmomente 90 und 92 wie in Fig. 10 dargestellt, entgegengesetzt zueinander und erlauben eine spielfreie Festlegung des Schwenklagerkörpers 14 relativ zum Führungskörper 40, insbesondere zur Führungshülse 44 derselben, da durch die jeweils einseitige Anlage der Drehblockierkörper 54 einerseits in der Führungsaufnahme 56 und andererseits in der ersten Aufnahme 58 das Spiel zwischen der Führungsaufnahme 58 und dem Drehblockierkörper 54 sowie der ersten Aufnahme 58 im Bereich beider Drehblockierkörper 54b und 54c eliminiert wird.

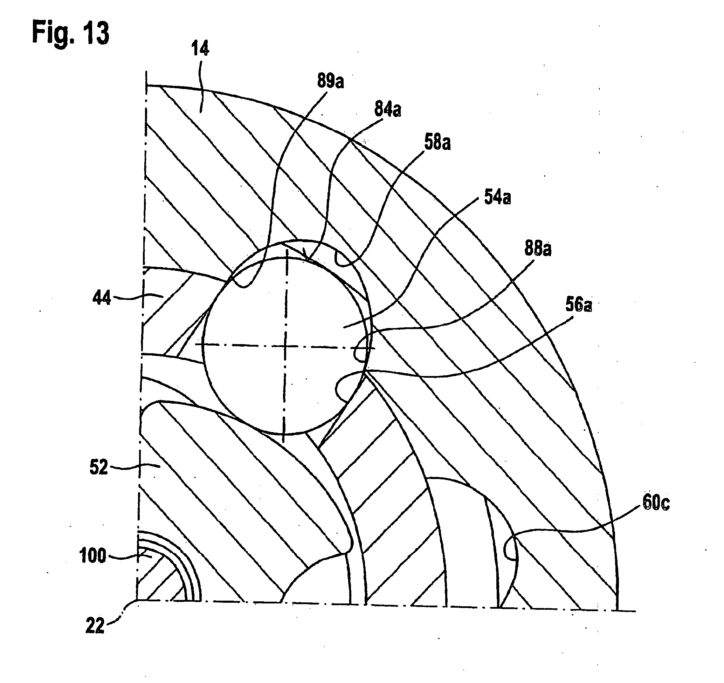

Ferner ist, wie in Fig. 13 dargestellt, beim Drehblockierkörper 54a vorgesehen, dass dieser mit seiner Mantelfläche 80a sowohl an der in Umlaufrichtung 64 liegenden Seite 88a als auch an der entgegengesetzt zu dieser Seite liegenden Seite 89a der ersten Aufnahme 58a anliegt, und somit je nach Fertigungstoleranz im Bereich der Führungsaufnahme 56a und der entsprechenden Aufnahme 58a und je nach Belastung des Kugelhalses 10 im Anhängerbetrieb in der Regel zu einem der beiden Drehmomente 90 und 92 beiträgt und somit in der Regel dazu dient, zusätzlich zu dem aufgrund der Belastung des Kugelhalses 10 belasteten Drehblockierkörper 54b oder 54c noch Last aufzunehmen, es kann aber auch ein Zustand auftreten, in dem der Drehblockierkörper 54a zu keinem der beiden Drehmomente 90 und 92 beitragen kann.

Um dem Betätigungskörper 52 die Möglichkeit zu eröffnen, jeweils jeden der drei Drehblockierkörper 54 optimal zu beaufschlagen, ist vorgesehen, dass in der aktiven Stellung eine Zentrierung des Betätigungskörpers 52 entsprechend der Lage der Drehblockierkörper 54 erfolgt, und daher ist der Betätigungskörper 52, wie in den Fig. 4, 6 und 8 dargestellt, mit einer zentralen Bohrung 96 über einen Zwischenraum 98 an einer Führungsachse 100 gelagert, so dass sich der Betätigungskörper 52 aufgrund des durch den Zwischenraum 98 geschaffenen Spiels relativ zur Führungsachse 100 entsprechend der durch Fertigungstoleranzen bedingten Lage der Drehblockierkörper 54 innerhalb des Führungskörpers 40 selbst zentrieren kann, wobei die Selbstzentrierung des Betätigungskörpers 52 geringfügig von einer koaxialen Anordnung zur Führungsachse 100 und somit zur geometrischen Schwenkachse 22 abweichen kann.

Aufgrund der Selbstzentrierung wirken die Drehblockierkörper 54a, 54b und 54c in der jeweiligen Führungsrichtung 57a, 57b und 57c mit ungefähr gleich großen Kräften Ka, Kb und Kc auf die Aufnahmen 58a, 58b und 58c oder 60a, 60b und 60c, so dass auch die auf den Betätigungskörper 52 wirkenden Reaktionskräfte RKa, RKb und RKc ungefähr gleich groß sind.

Bei dem dargestellten Ausführungsbeispiel der erfindungsgemäßen Lösung sind die Drehblockierkörper 54 in den Führungsaufnahmen 56 in gleichen Winkelabständen um die Schwenkachse 22 herum angeordnet, so dass die durch die Selbstzentrierung ungefähr gleich großen Reaktionskräfte RKa, RKb, RKc auf einen der Drehblockierkörper 54a, 54b, 54c sich zu gleichen Teilen auf die anderen Drehblockierkörper 54b und 54c, 54a und 54c sowie 54a und 54b auswirken und sich somit insgesamt aufheben, so dass der Betätigungskörper 52 im Kräftegleichgewicht steht und keine zusätzliche Abstützung benötigt.

Vorzugsweise sind die Drehblockierkörper 54, wie in den Fig. 4, 6 und 8 dargestellt, als Rollen, insbesondere kreiszylindrische Rollen, ausgebildet, die somit einerseits linienförmig an den Betätigungskörper 52 und andererseits auch linienförmig an den Aufnahmen 58 oder 60 anliegen. In diesem Fall sind die Aufnahmen 58, 60 als in Richtung parallel zur Schwenkachse 22 eine konstante Querschnittsform aufweisende Vertiefungen ausgebildet, wobei die Querschnittsform näherungsweise auf einem Kreisausschnitt basiert.

Aus diesem Grund ist der Zwischenraum 98 auch so groß gewählt, dass der Betätigungskörper 52 relativ zur geometrischen Schwenkachse 22 sogar eine geringfügige Taumelbewegung ausführen kann und sich somit den linienförmigen Anlagen aller drei Drehblockierkörper 54 an allen jeweils drei Aufnahmen 58 oder 60 anpassen kann.

Die Führungsachse 100 vermittelt somit nur eine sehr grobe drehbare Lagerung des Betätigungskörpers 52 relativ zur Schwenkachse 22, die primär dann relevant ist, wenn der Betätigungskörper 52 die Drehblockierkörper 54 in einer Lösestellung hält in welcher die Drehblockierkörper 54 in die Rückzugsaufnahmen 62 des Betätigungskörpers 52 eintauchen.

Um den Betätigungskörper 52 zu veranlassen, sich stets so zu bewegen, dass sich die Drehblockierkörper 54 in Richtung der Blockierstellung bewegen, ist der Betätigungskörper 52 durch eine Drehfeder 102 beaufschlagt, die einerseits auf den Betätigungskörper 52 wirkt und andererseits an dem Führungskörper 40 abgestützt ist.

Die Druckfeder bewirkt auch, dass der Betätigungskörper 52 die Drehblockierkörper 54 mit kraftbeaufschlagt in die Aufnahmen 58 oder 60 drückt und somit wird der Schwenklagerkörper spielfrei fixiert, wobei die Spielfreiheit auch bei sich aufgrund der Belastungen im Betrieb verändernden Geometrie der Aufnahmen 58, 60 durch ein Weiterdrehen des Betätigungskörpers 52 in der Drehrichtung 72 aufrechterhalten wird.

Vorzugsweise erstreckt sich der Führungskörper 40 mit seiner Führungshülse 44 bis zu einem Deckel 104, welcher auf einer dem Flansch 42 gegenüberliegenden Seite einen von der Führungshülse 44 umschlossenen Innenraum 106 abschließt.

In dem Innenraum 106 liegt im Anschluss an den Deckel 104 die Drehfeder 102 und an diese schließt sich der Betätigungskörper 52 an, der sich durch die gesamte Führungshülse 44 sowie den Flansch 42 und einen Durchbruch 108 in der Trägerplatte 26 hindurch erstreckt.

Ferner ist die Führungsachse 100 mit einem endseitigen Gewindeabschnitt 112 versehen und mit diesem in eine Gewindebohrung 114 in dem Deckel 104 eingeschraubt, so dass die Führungsachse 100 durch den Deckel 104 koaxial zur Schwenkachse 22 ausgerichtet gehalten wird.

Die Führungshülse 44 weist außerdem im Anschluss an den Deckel 104 außenseitig einen Gewindeabschnitt 116 auf, der radial gegenüber der Außenmantelfläche 46 zurückgesetzt ist und auf welchen ein Haltering 120 aufschraubbar ist, der zusammen mit dem Flansch 42 eine axiale Führung für den Schwenklagerkörper 14 bildet. Der Schwenklagerkörper 14 ist somit zwischen dem aufgeschraubten Haltering 120 und dem Flansch 42 gegen eine Bewegung in Richtung der Schwenkachse 22 geführt ist, wobei stirnseitige Endflächen 122 und 124 des Schwenklagerkörpers 14 gleitend an Ringflächen 126 und 128 des Flansches 42 bzw. des Halterings 120 anliegen.

Zur Abdichtung des relativ zum Führungskörper 40 drehbaren Schwenklagerkörpers 14 gegenüber dem Führungskörper ist sowohl der Flansch 42 als auch der Haltering 120 jeweils mit einer umlaufenden Dichtung 132 bzw. 134 versehen, die jeweils mit Lippen 136 bzw. 138 an den stirnseitigen Endflächen 122, 124 gleitend anliegen, so dass die Schwenklagereinheit 20 gegen ein Eindringen von Feuchtigkeit und Schmutz bei einer Schwenkbewegung des Kugelhalses 10 mit dem Schwenklagerkörper 14 abgedichtet ist.

Um den Betätigungskörper 52 gegen die Kraft der Drehfeder 102 von der aktiven Stellung in die inaktive Stellung bewegen zu können, ist eine als Ganzes mit 150 bezeichnete Betätigungsvorrichtung vorgesehen.

Diese Betätigungsvorrichtung 150 umfasst, wie in Fig. 4, 6 und 8 dargestellt, eine relativ zum Betätigungskörper 52 drehbares Drehantriebselement 152, welches ebenfalls drehbar an der Führungsachse 100 gelagert ist.

Das Drehantriebselement 152 umfasst, wie in den Fig. 4, 6 und 8 dargestellt, eine Zugseilauflage 154, auf welcher ein Zugseil 156 liegt, welches, wie in Fig. 3 dargestellt, über einen Seilzug 158 zu einem nicht näher bezeichneten Betätigungselement geführt ist, beispielsweise einen Betätigungsgriff, geführt ist.

Das Zugseil 156 ist dabei, wie ebenfalls in Fig. 3 dargestellt, durch einen endseitigen Lagerkörper 162 an dem Drehantriebselement 152 fixiert und erstreckt sich ausgehend von dem Lagerkörper 162 auf der an dem Drehantriebselement 152 vorgesehenen Zugseilauflage 154.

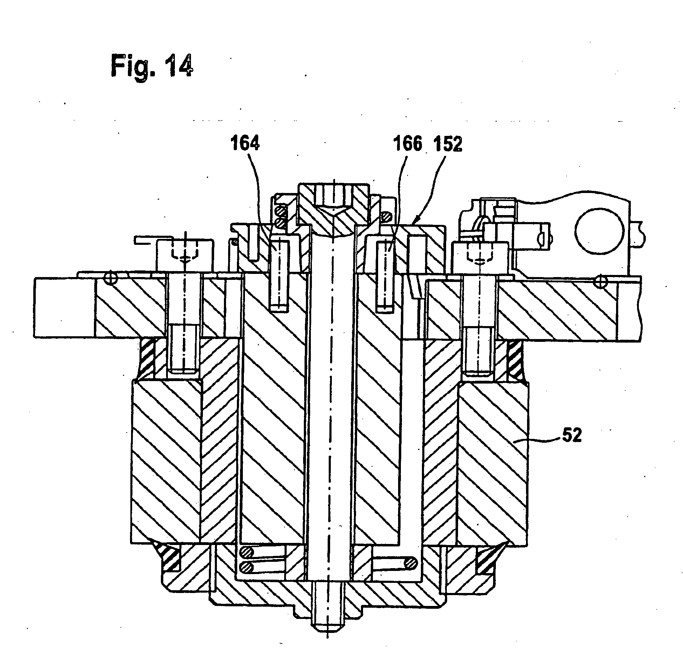

Das Drehantriebselement 152 ist, wie in Fig. 14 dargestellt, über Mitnehmer 164, 166 mit dem Betätigungskörper 52 gekoppelt, wobei die Mitnehmer 164 und 166 - wie nachfolgend beschrieben - derart mit dem Drehantriebselement 152 verbunden sind, dass dieses sich ausgehend von einer Ausgangsstellung begrenzt frei relativ zum Betätigungskörper 52 verdrehen kann, ohne die Mitnehmer 164, 166 zu beaufschlagen, und erst bei Erreichen einer Mitnahmestellung eine Verdrehung des Betätigungskörpers 52 angetrieben durch das Drehantriebselement 152 erfolgt.

Der Grund hierfür ist der, dass das Drehantriebselement 152 nicht nur dazu dient, eine Drehung des Betätigungskörpers 52 von seiner Fixierstellung in die Lösestellung zu bewirken, sondern gleichzeitig auch dazu dient, eine in Fig. 3 dargestellte Drehsicherung 170 für den Betätigungskörper 52 von einer Sicherungsstellung in eine Entsicherungsstellung zu bewegen.

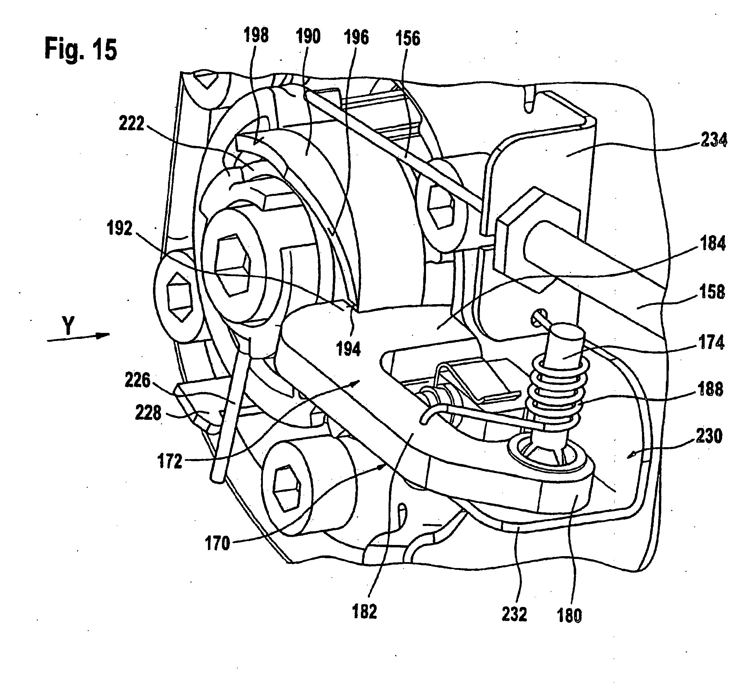

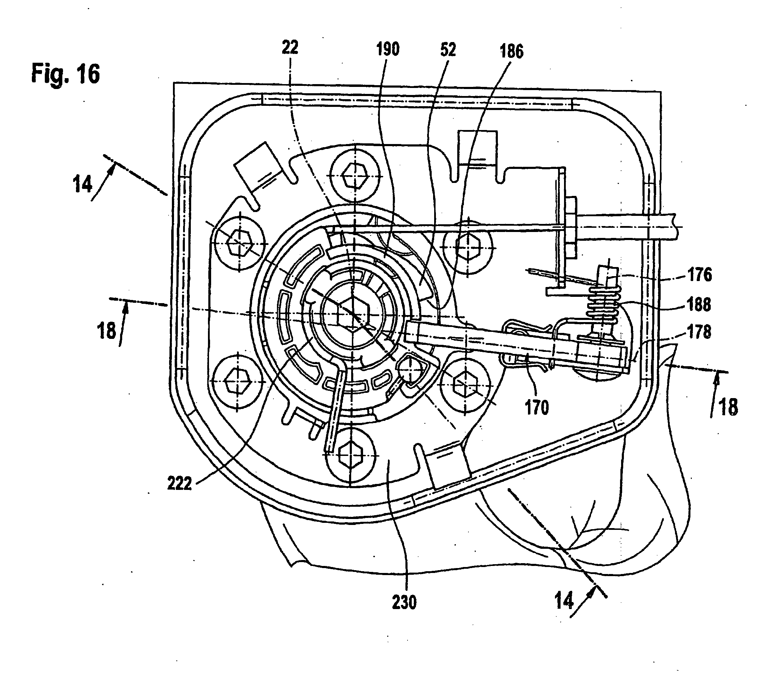

Die Drehsicherung 170 umfasst, wie in Fig. 15 bis 18 dargestellt, einen Sicherungshebel 172, welcher an einem relativ zur Trägerplatte 26 feststehend angeordneten Lagerzapfen 174 um eine Achse 176 schwenkbar gelagert ist, wobei sich der Sicherungshebel 172 in einer Ebene 178 erstreckt, die ungefähr parallel zur Schwenkachse 22 verläuft.

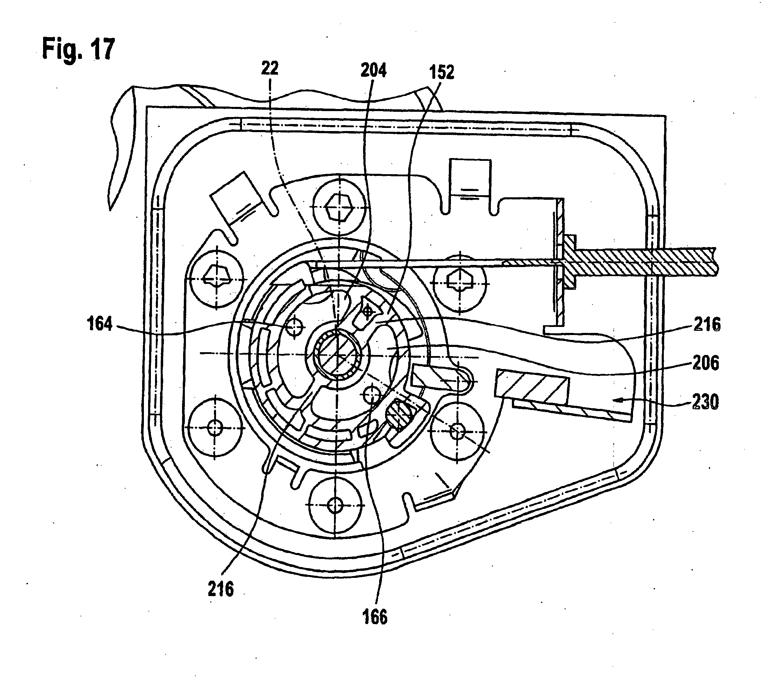

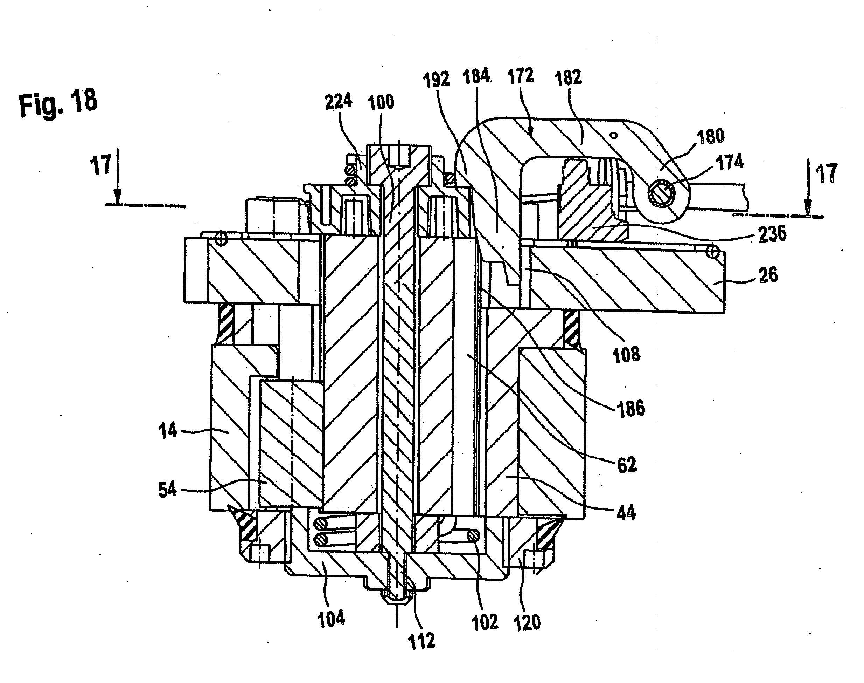

Der Sicherungshebel 172 ist mit einem von dem Lagerzapfen 174 durchsetzten Lagerabschnitt 180 versehen, und erstreckt sich ausgehend von dem Lagerabschnitt 180 mit einem Bügelabschnitt 182 bis zu einem Sicherungsabschnitt 184, welcher, wie in Fig. 17 und 18 dargestellt, in den Durchbruch 108 der Tragplatte 26 eingreift, und zwar derart, dass der Sicherungsabschnitt 184 im Bereich einer der Rückzugsaufnahmen 62 liegt, sofern der Betätigungskörper 52 in seiner aktiven Stellung steht. Damit verhindert der Sicherungsabschnitt 184 ein Verdrehen des Betätigungskörpers 52 derart, dass die Drehblockierkörper 54 in eine der Rückzugsaufnahmen 62 eintreten und in ihre Lösestellung übergehen können.

Insbesondere liegt der Sicherungsabschnitt 184 so, dass bei einer Drehbewegung des Betätigungskörpers 52 eine am Übergang der Rückzugsaufnahmen 62 zu der entgegengesetzt zur Umlaufrichtung 64 vorausgehenden Druckfläche 66 vorgesehene Stufe 186 gegen den Sicherungsabschnitt 184 laufen würde, so lange der Sicherungshebel 172 in seiner Sicherungsstellung steht. Diese Sicherungsstellung wird durch eine auf den Sicherungshebel wirkende Drehfeder 188 aufrecht erhalten.

Um den Sicherungshebel 172 aus der Sicherungsstellung herauszuschwenken, ist das Drehantriebselement 152, wie in Fig. 15 dargestellt, mit einem Betätigungskamm 190 versehen, der mit einer Betätigungsnase 192 am Sicherungshebel 172 zusammenwirkt.

Der Betätigungskamm 190 umfasst dabei eine erste Auflagefläche 194, auf welcher die Betätigungsnase 192 dann aufliegt, wenn der Sicherungshebel 172 in seiner Sicherungsstellung steht.

Der Betätigungskamm 190 umfasst eine von der ersten Auflagefläche 194 ausgehende und sich eine von der ersten Auflagefläche 194 zu einer zweiten Auflagefläche 198 ansteigende Hebefläche 196, welche in der Lage ist, durch Einwirken auf die Betätigungsnase 192 den Sicherungshebel 172 in Richtung einer Entsicherungsstellung zu bewegen.

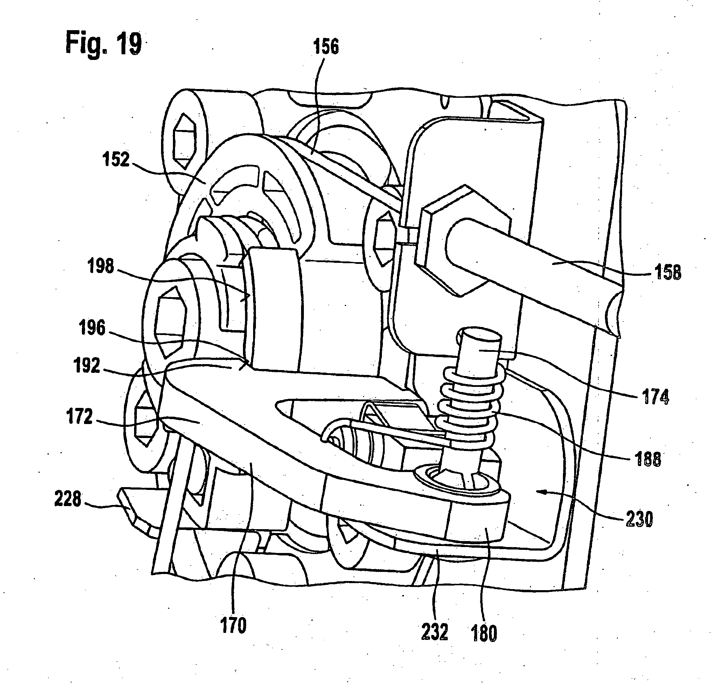

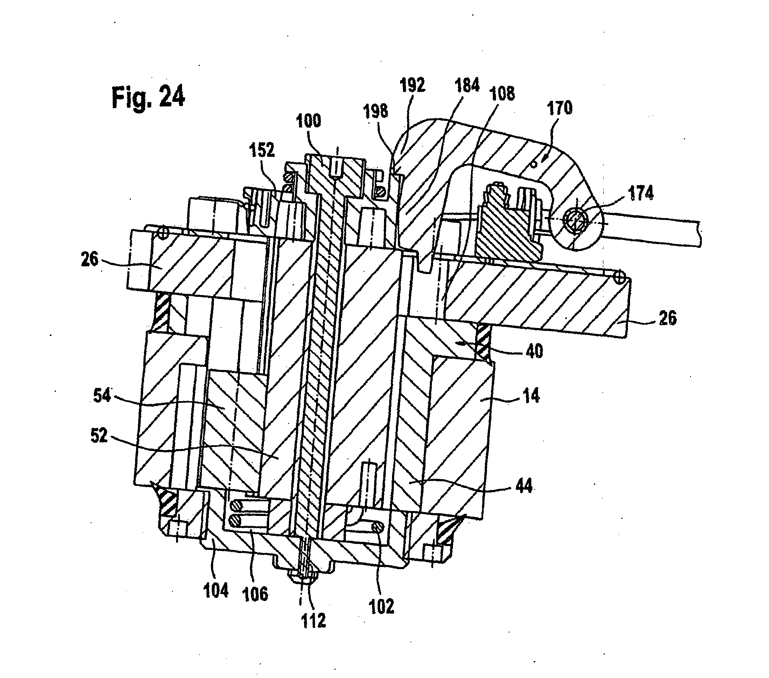

Hierzu erfolgt, wie in Fig. 19 dargestellt, ein Verschwenken des Sicherungshebels 172 um die Achse 176 derart, dass, wie in Fig. 24 dargestellt, so, dass der Sicherungsabschnitt 184 aus dem Durchbruch 108 in der Tragplatte 26 herausbewegt wird und eine Drehung des Betätigungskörpers 52 mit der Stufe 186 nicht mehr behindert.

Diese Entsicherungsstellung ist dann erreicht, wenn die Betätigungsnase 192 durch die Hebefläche 196 bis zur zweiten Auflagefläche 198 angehoben wurde und auf dieser, wie beispielsweise in Fig. 19, 21 und 24 dargestellt, aufliegt.

Über den Betätigungskamm 190 des Drehantriebselements 152 erfolgt eine Abstimmung mit der Drehung des Drehantriebselements 152 und der durch dieses eingeleiteten Drehbewegung des Betätigungskörpers 52 wie nachfolgend beschrieben.

Wie in Fig. 17 dargestellt, tauchen die beiden Mitnehmer 164 und 166 in für diese vorgesehene Ausnehmungen 204 und 206 des Drehantriebselements 152 ein, wobei die Ausnehmungen 204 und 206 durch Mitnahmeelemente 214 und 216, im dargestellten Ausführungsbeispiel ausgebildet als Abschlusswände der Ausnehmungen 204 und 206, begrenzt sind. Diese Mitnahmeelemente 214 und 216 stehen in einer in den Fig. 15 bis 18 dargestellten Ausgangsstellung des Drehantriebselements 152 im Abstand von den Mitnehmern 164 und 166.

In dieser Ausgangsstellung des Drehantriebselements 152 liegt bedingt durch die Drehfeder 188 die Betätigungsnase 192 auf der ersten Auflagefläche 194 auf, so dass dadurch der Sicherungshebel 172 in seiner Sicherungsstellung steht und mit dem Sicherungsabschnitt 184 eine Drehbewegung des Betätigungskörpers 52 von seiner aktiven Stellung in seine inaktive Stellung blockiert.

Der Abstand der Mitnahmeelemente 214 und 216 von den Mitnehmern 164 bzw. 166 erlaubt somit eine Drehung des Drehantriebselements 152 um die Schwenkachse 22 in einem Freigangzustand um einen Freigangwinkel ohne dass eine Mitnahme des Betätigungskörpers 52 erfolgt.

Der Freigangwinkel der Drehung des Drehantriebselements 152 entspricht dabei dem Winkel, über welchen sich die Hebefläche 196 am Betätigungskamm 190 erstreckt, so dass das Drehantriebselement 152 mit dem Betätigungskamm 190 ohne Mitnahme des Betätigungskörpers 52 soweit drehbar ist, dass der Sicherungshebel 172 durch die Einwirkung der Hebefläche 196 auf die Betätigungsnase 192 in seine Entsicherungsstellung verschwenkt wurde, in welcher der Sicherungsabschnitt 184 die Drehbewegung des Betätigungskörpers 52 nicht mehr blockiert.

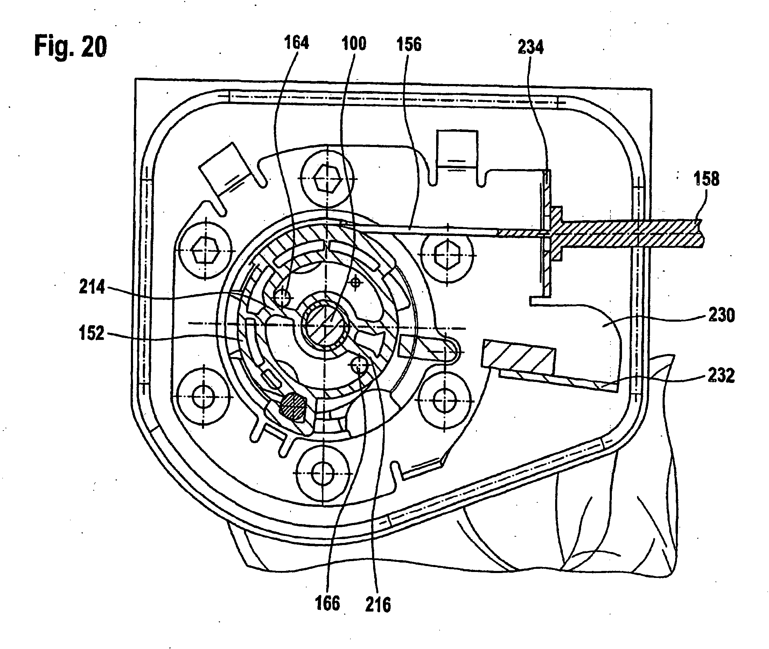

Diese Zwischenstellung des Drehantriebselements 152 ist in den Fig. 19 und 20 dargestellt, wobei erkennbar ist, dass in der Zwischenstellung die Mitnahmeelemente 214, 216 an den Mitnehmern 164 bzw. 166 anliegen.

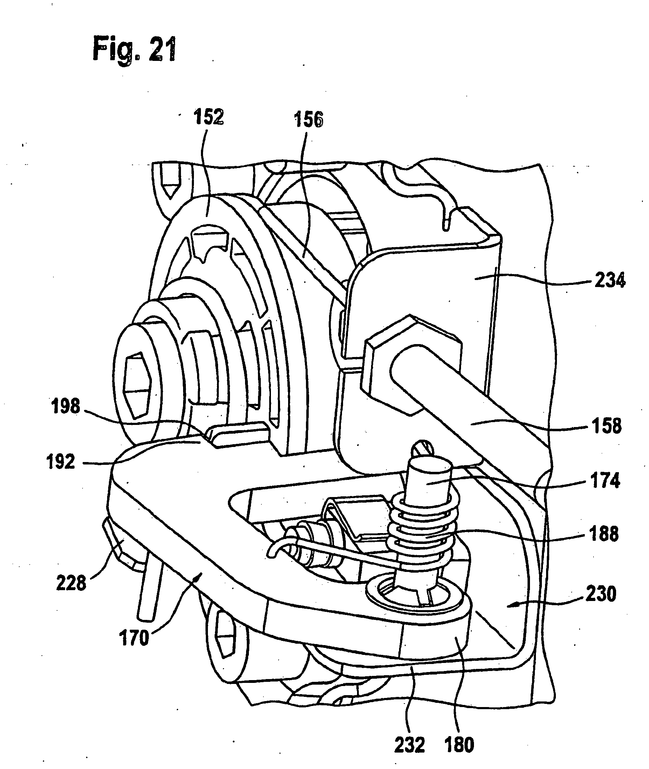

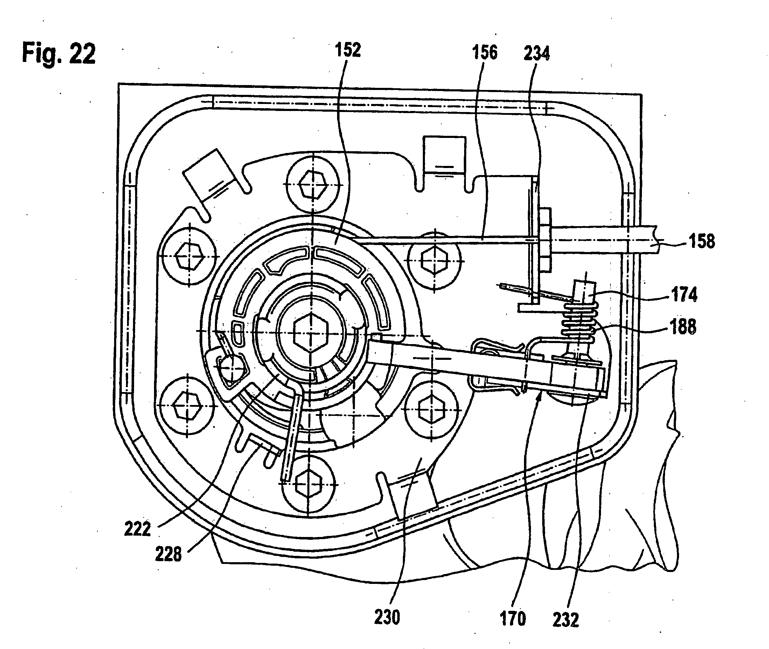

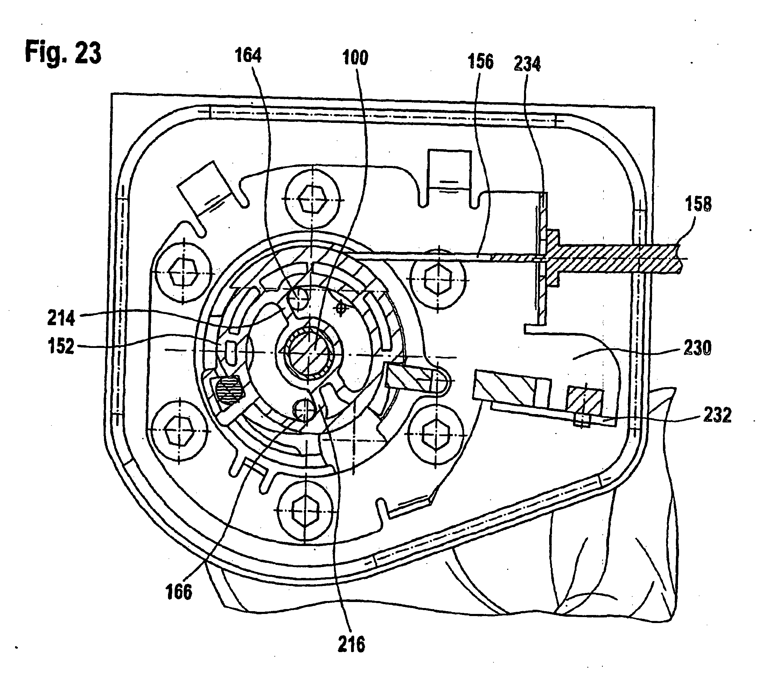

Eine weitere Drehung des Drehantriebselements 152 hat somit die Mitdrehung des Betätigungskörpers 52 in einem Mitnahmezustand der Betätigungsvorrichtung 150 zur Folge, wobei bei der Drehbewegung des Drehantriebselements 152 in die in den Fig. 21 bis 23 dargestellte Betätigungsstellung eine derartige Drehung des Betätigungskörpers 52 in der Richtung 64 erfolgt, dass die Drehblockierkörper 54 in ihre Lösestellung übergehen können und dabei in die Rückzugsaufnahmen 62 eintauchen.

Gleichzeitig gleitet die Betätigungsnase 192 bei der Bewegung in die Betätigungsstellung auf der zweiten Auflagefläche 198, die den Sicherungshebel 172 in der Entsicherungsstellung hält, so dass - wie bereits beschrieben - die Drehung des Betätigungskörpers 52 in die inaktive Stellung ungehindert durch den Sicherungsabschnitt 184 des Sicherungshebels 172 möglich ist.

Hierzu ist eine ständige beispielsweise manuelle Einwirkung auf das Zugseil 156 erforderlich, da bereits der Betätigungskörper 52 unter der Wirkung der Drehfeder 102 steht.

Außerdem ist aber auch noch das Drehantriebselement 152 mittels einer Drehfeder 222 derart beaufschlagt, dass das Drehantriebselement 152 aufgrund der Drehfeder 222 stets die Tendenz hat, in seine Ausgangsstellung zurückzukehren.

Die Drehfeder 222 stützt sich dabei mit einem Schenkel an dem Drehantriebselement 152 ab, und umschlingt dabei eine Drehfederaufnahme 224 des Drehantriebselements 152 und weist zusätzlich einen Schenkel 226 auf, welcher an einem Stützfinger 228 eines als Ganzes mit 230 bezeichneten Halteteils abgestützt ist, das seinerseits fest mit der Tragplatte 26 verbunden ist, wobei das Halteteil 230 außerdem noch einen Flansch 232 aufweist, der den Lagerzapfen 174 hält sowie einen Flansch 234, an welchem der Seilzug 158 abgestützt ist.

Um außerdem die Stellungen des Sicherungshebels 172 erfassen zu können, ist an dem Halteteil 230 noch ein Taster 236 montiert, welcher die Stellungen des Bügelabschnitts 182 des Sicherungshebels 172 erfasst, und insbesondere detektiert, ob der Sicherungshebel 172 in seiner Sicherungsstellung steht oder aus dieser herausbewegt wurde.

Somit ergibt sich folgende Gesamtfunktion der erfindungsgemäßen Anhängekupplung.

Steht die erfindungsgemäße Anhängekupplung entweder in der Arbeitsstellung A oder in der Ruhestellung R so ist, ohne dass beispielsweise manuell auf die Betätigungsvorrichtung 150 eingewirkt wird, das Drehantriebselement 152 in seiner Ausgangsstellung, so dass auch die Drehblockiereinrichtung 50 eine Drehung des Schwenklagerkörpers 14 um die Schwenkachse 22 spielfrei blockiert.

Dies erfolgt dadurch, dass der Betätigungskörper 52 - wie bereits beschrieben -aufgrund der Wirkung der Drehfeder 102 in seiner aktiven Stellung steht und die Drehblockierkörper 54 in ihrer Blockierstellung kraftbeaufschlagt in die Aufnahmen 58 oder 60 eingreifen.

Ferner steht bei in Ausgangsstellung stehendem Drehantriebselement 152 auch die Drehsicherung 170 in ihrer Sicherungsstellung 172, da der Sicherungshebel 172 aufgrund der Wirkung der Feder 188 mit der Betätigungsnase 192 auf der ersten Auflagefläche 194 des Betätigungskamms 190 aufliegt und somit eine Drehung des Betätigungskörpers 52 insoweit blockiert, als dieser sich - selbst wenn die Drehfeder 102 brechen würde - nie in die inaktive Stellung und folglich soweit drehen kann, dass die Drehblockierkörper 54 in ihre Lösestellung übergehen. Vielmehr wird der Betätigungskörper 52 durch den Sicherungshebel 172, insbesondere den Sicherungsabschnitt 184 desselben, derart gegen eine Drehbewegung blockiert, dass die Drehblockierkörper 54 stets immer noch auf den Druckflächen 66 des Betätigungskörpers 52 aufliegen und somit durch diese stets noch in einer Blockierstellung gehalten sind, in denen die Drehblockierkörper 54 entweder in die Aufnahmen 58 oder die Aufnahmen 60 eingreifen und somit eine Drehbewegung des Schwenklagerkörpers 14 blockieren, selbst wenn diese Blockierung nicht mehr spielfrei erfolgt.

Erfolgt nun eine Einwirkung auf die Betätigungsvorrichtung 150, beispielsweise über das Zugseil 156, so erfolgt zunächst eine Drehung des Drehantriebselements 152 im Freigangzustand, welche ohne Drehung des Betätigungskörpers 52 bewirkt, dass die Drehsicherung 170 von ihrer Sicherungsstellung in ihre Entsicherungsstellung übergeht und somit der Sicherungshebel 172 eine Drehbewegung des Betätigungskörpers 52 von der aktiven Stellung in die inaktive Stellung nicht mehr blockieren kann. Ab Erreichen der Zwischenstellung des Drehantriebselements 152 nimmt dieses aufgrund des Mitnahmezustands über die Mitnehmer 164, 166 auch den Betätigungskörper 52 bei einer weiteren Drehbewegung mit, bewegt diesen somit in die inaktive Stellung, wobei gleichzeitig die Drehsicherung 170 in der Entsicherungsstellung gehalten wird, nämlich dadurch, dass der Sicherungshebel 172 aufgrund der auf der zweiten Auflagefläche 198 aufliegenden Betätigungsnase 192 in seiner Entsicherungsstellung verbleibt.

Entfällt die Einwirkung auf die Betätigungsvorrichtung 150, beispielsweise durch Loslassen des Zugseils 156, so drehen sich unter Wirkung der Drehfeder 222 und der Drehfeder 102 das Drehantriebselement 152 und mitsamt dem Betätigungskörper 52 zurück, nämlich soweit, bis der Betätigungskörper 52 seine aktive Stellung erreicht hat und die Drehblockierkörper 54 wieder in ihrer Blockierstellung in eine der Aufnahmen 58 oder 60 eingreifen. Ferner dreht sich dann das Drehantriebselement 152 unter Wirkung der Drehfeder 222 weiter zurück bis in die Ausgangsstellung, so dass die Drehsicherung 170 wiederum in ihre Sicherungsstellung übergeht und den Betätigungskörper 52 gegen eine Verdrehung derart, dass dieser in die inaktive Stellung übergeht, sichert.

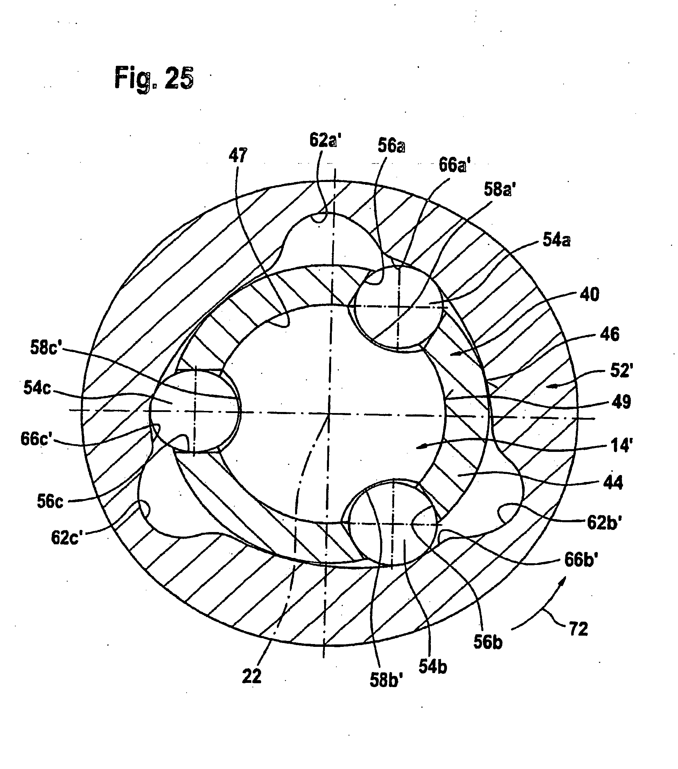

Bei einem nicht unter den Anspruch 1 fallenden zweiten Ausführungsbeispiel einer erfindungsgemäßen Anhängekupplung, dargestellt in Fig. 25, ist das erste Ende 12 des Kugelhalses mit einem Schwenklagerkörper 14' verbunden, welcher im Innern des Führungskörpers 40 liegt und dabei in diesem um die Schwenkachse 22 drehbar geführt ist, wobei beispielsweise eine zylindrische Außenfläche 49 des Schwenklagerkörpers 14' an einer zylindrischen Innenmantelfläche 47 der Führungshülse 44 die drehbare Führung des Schwenklagerkörpers 14' bilden.

Ferner ist der Schwenklagerkörper 14' mit den Aufnahmen 58a', 58b' und 58c' für die Drehblockierkörper 54a, 54b und 54c versehen, in welche die Drehblockierkörper 54a, 54b und 54c in ihrer Blockierstellung hineinragen und dabei eine Blockierung des Schwenklagerkörpers 14' in gleicher Weise wie im Zusammenhang mit dem ersten Ausführungsbeispiel beschrieben, bewirken.

Bei diesem Ausführungsbeispiel ist ferner der Betätigungskörper 52' so angeordnet, dass dieser die Führungshülse 44 auf ihrer Außenmantelfläche 46 umschließt und dabei die Rückzugsaufnahmen 62a', 62b' und 62c' mit sich an diese anschließenden Druckflächen 66a', 66b' und 66c' aufweist, so dass durch Drehen des Betätigungskörpers 52' in der Drehrichtung 72 die Drehblockierkörper 58'a. 58'b und 58'c in ihre Blockierstellung bewegbar sind und dabei durch die Druckflächen 66a',. 66b' und 66c' beaufschlagt sind, während bei Drehung des Betätigungskörpers 52' entgegengesetzt zur Drehrichtung 72 die Drehblockierkörper 54a, 54b und 54c in ihre Lösestellung überführbar sind, wenn sie in die Rückzugsaufnahmen 62a', 62b' und 62c' eintauchen können.

Im Übrigen funktioniert das zweite Ausführungsbeispiel der erfindungsgemäßen Anhängekupplung analog zum ersten Ausführungsbeispiel, so dass hinsichtlich der grundsätzlichen Funktionen vollinhaltlich auf die Ausführungen zum ersten Ausführungsbeispiel Bezug genommen werden kann.

Das zweite Ausführungsbeispiel hat den Vorteil, dass beispielsweise die Betätigung des Betätigungskörpers 52' dadurch vereinfacht werden kann, da dieser in einfacher Weise von seiner Außenumfangsseite her zugänglich ist.

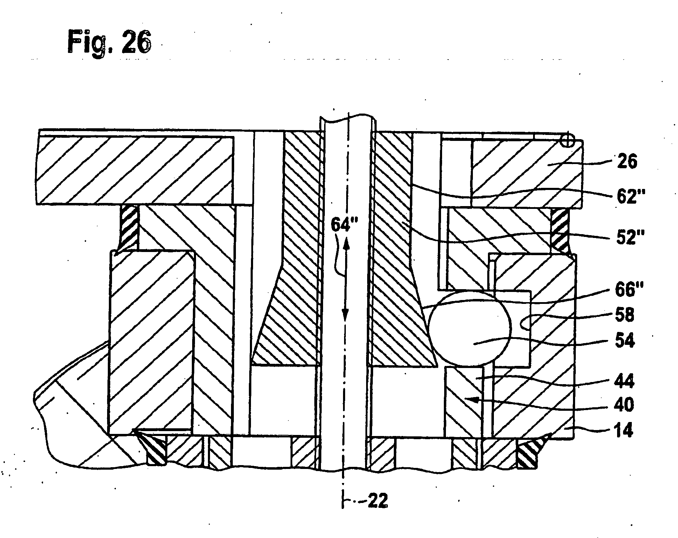

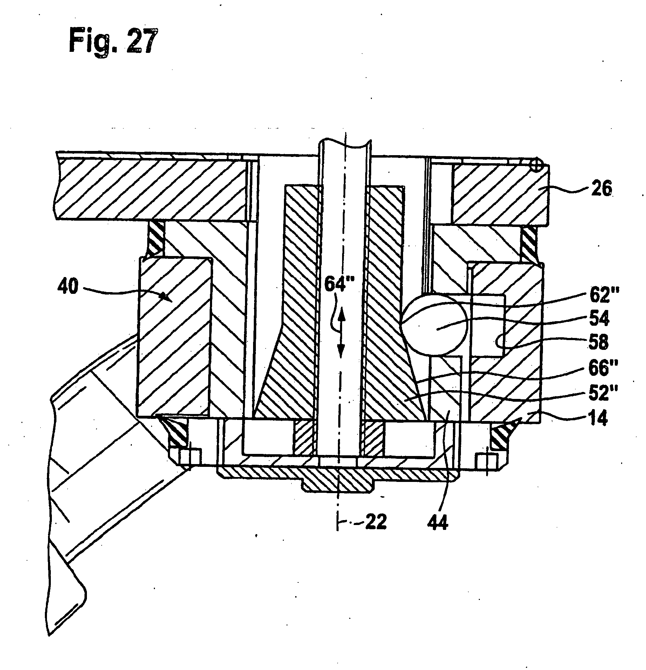

Bei einem dritten Ausführungsbeispiel einer erfindungsgemäßen Anhängekupplung, dargestellt in den Fig. 26 und 27, sind all diejenigen Teile, die mit denen des voranstehenden Ausführungsbeispiels identisch sind, mit denselben Bezugszeichen versehen, so dass hinsichtlich der Erläuterung derselben vollinhaltlich auf die Ausführungen zu den voranstehenden Ausführungsbeispielen Bezug genommen wird.

Im Gegensatz zum ersten Ausführungsbeispiel ist bei dem dritten Ausführungsbeispiel der Betätigungskörper 52" nicht um die Schwenkachse 22 drehbar, sondern in seiner Betätigungsrichtung 64" im Wesentlichen parallel zur Schwenkachse 22 in dem Führungskörper 40, vorzugsweise in der Führungshülse 44, verschiebbar angeordnet.

Aus diesem Grund ist die Rückzugsaufnahme 62" für jeden der Drehblockierkörper 54 beispielsweise eine zur Schwenkachse 22 zylindrische Fläche und an diese schließt sich zur Bildung der Druckfläche 66" eine sich konisch radial zur Schwenkachse 22 erweiternde Fläche an.

Die Druckflächen 66" werden dabei durch Verschieben des Betätigungskörpers 52" in Richtung der Tragplatte 26 wirksam und pressen analog zum ersten Ausführungsbeispiel die Drehblockierkörper 54 radial nach außen und in die Aufnahmen 58 oder 60, so dass eine Verriegelung des Schwenklagerkörpers 14 entsprechend demselben Mechanismus wie beim ersten Ausführungsbeispiel erfolgt.

In gleicher Weise lässt sich durch Verschieben des Betätigungskörpers 52" in der Betätigungsrichtung 64, jedoch weg von der Tragplatte 26 erreichen, dass die Drehblockierkörper 54 mit der Rückzugsaufnahme 62 in Wechselwirkung treten und nicht mehr durch die Druckflächen 66 beaufschlagt sind, so dass die Drehblockierkörper 54 die Möglichkeit haben, so weit in die Führungshülse des Führungskörpers 40 einzutauchen, dass sie radial nicht mehr über diesen überstehen und somit nicht mehr in die Aufnahme 58 oder 60 eingreifen, so dass der Schwenklagerkörper 14 frei um die Schwenkachse 22 drehbar ist.

Bei dem dritten Ausführungsbeispiel kann das Verschieben des Betätigungskörpers 52" in der Betätigungsrichtung 64" über jede Art von Linearantrieb erfolgen.

## Patentansprüche

1. Anhängekupplung umfassend einen zwischen einer Arbeitsstellung und einer Ruhestellung bewegbaren Kugelhals (10) mit einem an einem ersten Ende angeordneten Schwenklagerkörper (14) und einer an einem zweiten Ende angeordneten Kupplungskugel (18), eine fahrzeugfest angeordnete Schwenklagereinheit (20), in welcher der Schwenklagerkörper (14) um eine Schwenkachse (22) zwischen der Arbeitsstellung (A) und der Ruhestellung (R) verschwenkbar aufgenommen ist, und eine Drehblockiereinrichtung (50) mit mindestens einem Drehblockierkörper (54), der in einer Führungsrichtung (57) mit mindestens einer Komponente in radialer Richtung zur Schwenkachse (22) bewegbar ist, wobei der Drehblockierkörper (54) durch Bewegung in der Führungsrichtung (57) mit einer am Schwenklagerkörper (14) angeordneten Aufnahme (58, 60) in Eingriff bringbar ist, um damit in einer Blockierstellung die freie Drehbarkeit des Schwenklagerkörpers (14) zu unterbinden, und außer Eingriff bringbar ist, um in einer Lösestellung die ungehinderte freie Drehbarkeit des Schwenklagerkörpers (14) um die Schwenkachse (22) freizugeben, und mit einem eine quer zur Führungsrichtung (57) verlaufende Keilfläche aufweisenden und in einer Betätigungsrichtung bewegbaren Betätigungskörper (52), durch dessen Bewegung in der Betätigungsrichtung der mindestens eine Drehblockierkörper (54) in der Führungsrichtung (57) bewegbar und beaufschlagbar ist,
**dadurch gekennzeichnet, dass** die Drehblockiereinrichtung (50) mindestens zwei Drehblockierkörper (54) umfasst, dass die Drehblockierkörper (54) durch einen gemeinsamen Betätigungskörper (52) in der jeweiligen Führungsrichtung (57) von der Lösestellung, in welcher die Drehblockierkörper (54) in Rückzugsaufnahmen (62) des Betätigungskörpers (52) eintauchen, in die Blockierstellung bewegbar sind und dass der Schwenklagerkörper (14) mit einem Satz von ersten Aufnahmen (58) versehen ist, mit welchen die Drehblockierkörper (54) in der Arbeitsstellung (A) in Eingriff bringbar sind, und mit einem Satz von zweiten Aufnahmen (60) versehen ist, mit welchen die Drehblockierkörper (54) in der Ruhestellung (R) in Eingriff bringbar sind.

2. Anhängekupplung nach Anspruch 1, **dadurch gekennzeichnet, dass** die Drehblockiereinrichtung (50) mindestens drei Drehblockierkörper (54) umfasst.

3. Anhängekupplung nach Anspruch 1 oder 2, **dadurch gekennzeichnet, dass** die Drehblockierkörper (54) derart relativ zum Betätigungskörper (52) angeordnet sind, dass sich mindestens deren quer zur Schwenkachse (22) gerichtete und auf den Betätigungskörper (52) wirkenden Reaktionskräfte (RK) zumindest zum Teil kompensieren.

4. Anhängekupplung nach einem der voranstehenden Ansprüche, **dadurch gekennzeichnet, dass** die Drehblockierkörper (54) relativ zum Betätigungskörper (52) derart angeordnet sind, dass sich mindestens deren quer zur Schwenkachse (22) gerichteten und auf den Betätigungskörper (52) wirkende Reaktionskräfte (RK) im Wesentlichen aufheben.

5. Anhängekupplung nach einem der voranstehenden Ansprüche, **dadurch gekennzeichnet, dass** die Drehblockierkörper (54) um den Betätigungskörper (52) herum angeordnet sind.

6. Anhängekupplung nach einem der voranstehenden Ansprüche, **dadurch gekennzeichnet, dass** die Drehblockierkörper (54) im Wesentlichen symmetrisch zu einer senkrecht zur Schwenkachse (22) verlaufenden Ebene angeordnet sind.

7. Anhängekupplung nach einem der voranstehenden Ansprüche, **dadurch gekennzeichnet, dass** mindestens zwei der Drehblockierkörper (54) mit den für diese vorgesehenen Aufnahmen (58, 60) derart zusammenwirken, dass diese einander entgegengesetzt wirkende Drehmomente (90, 92) auf den Schwenklagerkörper (14) erzeugen.

8. Anhängekupplung nach dem Oberbegriff des Anspruchs 1 oder nach einem der voranstehenden Ansprüche, **dadurch gekennzeichnet, dass** die Drehblockiereinrichtung (50) mindestens zwei Drehblockierkörper (54) umfasst, dass die Drehblockierkörper (54) durch einen gemeinsamen Betätigungskörper (52) in der jeweiligen Führungsrichtung (57) von der Lösestellung, in welcher die Drehblockierkörper (54) in Rückzugsaufnahmen (62) des Betätigungskörpers (52) eintauchen, in die Blockierstellung bewegbar sind und dass der Betätigungskörper (52') eine in Richtung der Schwenkachse (22) verlaufende Betätigungsrichtung (64") aufweist.

9. Anhängekupplung nach dem Oberbegriff des Anspruchs 1 oder nach einem der Ansprüche 1 bis 7, **dadurch gekennzeichnet, dass** die Drehblockiereinrichtung (50) mindestens zwei Drehblockierkörper (54) umfasst, dass die Drehblockierkörper (54) durch einen gemeinsamen Betätigungskörper (52) in der jeweiligen Führungsrichtung (57) von der Lösestellung, in welcher die Drehblockierkörper (54) in Rückzugsaufnahmen (62) des Betätigungskörpers (52) eintauchen, in die Blockierstellung bewegbar sind und dass der Betätigungskörper (52) um die Schwenkachse (22) drehbar angeordnet ist.

10. Anhängekupplung nach Anspruch 9, **dadurch gekennzeichnet, dass** der Betätigungskörper (52) sich über einen Winkelbereich um die Schwenkachse (22) erstreckende und in ihrem radialen Abstand zur Schwenkachse (22) variierende Keilflächen (66) aufweist.

11. Anhängekupplung nach dem Oberbegriff des Anspruchs 1 oder nach einem der voranstehenden Ansprüche, **dadurch gekennzeichnet, dass** die Drehblockiereinrichtung (50) mindestens zwei Drehblockierkörper (54) umfasst, dass die Drehblockierkörper (54) durch einen gemeinsamen Betätigungskörper (52) in der jeweiligen Führungsrichtung (57) von der Lösestellung, in welcher die Drehblockierkörper (54) in Rückzugsaufnahmen (62) des Betätigungskörpers (52) eintauchen, in die Blockierstellung bewegbar sind und dass der mindestens eine Drehblockierkörper (54) durch einen sich in radialer Richtung an den Schwenklagerkörper (14) anschließenden Führungskörper (40) geführt ist.

12. Anhängekupplung nach Anspruch 11, **dadurch gekennzeichnet, dass** der Führungskörper (40) eine Führungshülse (44) mit der Führungsaufnahme (56) für den jeweiligen Drehblockierkörper (54) aufweist.

13. Anhängekupplung nach Anspruch 11 oder 12, **dadurch gekennzeichnet, dass** mit dem Führungskörper (40) ein Lager für den Betätigungskörper (52) verbunden ist.

14. Anhängekupplung nach einem der Ansprüche 11 bis 13, **dadurch gekennzeichnet, dass** der Führungskörper (40) ein Schwenklager für den Schwenklagerkörper (14) bildet.

15. Anhängekupplung nach einem der Ansprüche 11 bis 14, **dadurch gekennzeichnet, dass** der Führungskörper (40) Teil der fahrzeugfest angeordneten Schwenklagereinheit (20) ist.

16. Anhängekupplung nach einem der Ansprüche 11 bis 15, **dadurch gekennzeichnet, dass** der Betätigungskörper (52) den Führungskörper (40) umschließt und der Schwenklagerkörper (14') vom Führungskörper (40) umschlossen ist.

17. Anhängekupplung nach einem der Ansprüche 11 bis 15, **dadurch gekennzeichnet, dass** der Betätigungskörper (52) von dem Führungskörper (40) umschlossen ist und dass der Schwenklagerkörper (14) den Führungskörper (40) umgreift.

18. Anhängekupplung nach dem Oberbegriff des Anspruchs 1 oder nach einem der voranstehenden Ansprüche, **dadurch gekennzeichnet, dass** die Drehblockiereinrichtung (50) mindestens zwei Drehblockierkörper (54) umfasst, dass die Drehblockierkörper (54) durch einen gemeinsamen Betätigungskörper (52) in der jeweiligen Führungsrichtung (57) von der Lösestellung, in welcher die Drehblockierkörper (54) in Rückzugsaufnahmen (62) des Betätigungskörpers (52) eintauchen, in die Blockierstellung bewegbar sind und dass der Schwenklagerkörper (14) einen die Schwenklagereinheit (20) außenliegend umschließenden Außenkörper bildet, der gegenüber der Schwenklagereinheit (20) in Richtung der Schwenkachse (22) unverschiebbar angeordnet ist.

19. Anhängekupplung nach Anspruch 18, **dadurch gekennzeichnet dass** das erste Ende des Kugelhalses (10) an dem Außenkörper (14) angesetzt ist.

20. Anhängekupplung nach einem der voranstehenden Ansprüche, **dadurch gekennzeichnet, dass** der Betätigungskörper (52) so ausgebildet ist, dass er in einer inaktiven Stellung die Lösestellung der Drehblockierkörper (54) zulässt.

21. Anhängekupplung nach einem der voranstehenden Ansprüche, **dadurch gekennzeichnet, dass** der Betätigungskörper (52) so ausgebildet ist, dass er in einer aktiven Stellung die Drehblockierkörper (54) in ihrer Blockierstellung hält.

22. Anhängekupplung nach Anspruch 21, **dadurch gekennzeichnet, dass** der Betätigungskörper (52) durch einen elastischen Kraftspeicher (102) in Richtung seiner aktiven Stellung beaufschlagt ist.

23. Anhängekupplung nach einem der voranstehenden Ansprüche, **dadurch gekennzeichnet, dass** der Betätigungskörper (52) durch eine Betätigungsvorrichtung (150) von der aktiven Stellung in die inaktive Stellung bewegbar ist.

24. Anhängekupplung nach Anspruch 23, **dadurch gekennzeichnet, dass** der Betätigungskörper (52) durch die Betätigungsvorrichtung (150) entgegen der Beaufschlagung durch den Kraftspeicher (102) bewegbar ist.

25. Anhängekupplung nach Anspruch 23 oder 24, **dadurch gekennzeichnet, dass** mit der Betätigungsvorrichtung (150) der Betätigungskörper (52) entgegengesetzt zur durch den Kraftspeicher (102) bewirkten Drehrichtung verdrehbar ist.

26. Anhängekupplung nach einem der voranstehenden Ansprüche, **dadurch gekennzeichnet, dass** die Betätigungsvorrichtung (150) ein Antriebselement (152) aufweist, welches mit dem Betätigungskörper (52) gekoppelt ist.

27. Anhängekupplung nach Anspruch 26, **dadurch gekennzeichnet, dass** das Antriebselement (152) und der Betätigungskörper (52) über eine Mitnahmekopplungseinrichtung (164, 166; 214, 216) miteinander gekoppelt sind.

28. Anhängekupplung nach Anspruch 27, **dadurch gekennzeichnet, dass** die Mitnahmekopplungseinrichtung (164, 166,; 214, 216) einen mitnahmefreien Freigangzustand und einen Mitnahmezustand aufweist.

29. Anhängekupplung nach Anspruch 28, **dadurch gekennzeichnet, dass** die Mitnahmekopplungseinrichtung (164, 166; 214, 216) so ausgebildet ist, dass ein Bewegen des Antriebselements (152) ausgehend von einer Ausgangsstellung erst nach Durchlaufen des Freigangzustandes und Erreichen des Mitnahmezustandes in einer Zwischenstellung eine Bewegung des Betätigungskörpers bewirkt.

30. Anhängekupplung nach einem der Ansprüche 25 bis 29, **dadurch gekennzeichnet, dass** die Betätigungsvorrichtung (150) so ausgebildet ist, dass diese selbstständig in eine Ausgangsstellung übergeht.

31. Anhängekupplung nach Anspruch 30, **dadurch gekennzeichnet, dass** das Antriebselement (152) der Betätigungsvorrichtung (150) durch einen elastischen Kraftspeicher (222) in Richtung seiner Ausgangsstellung beaufschlagt ist.

32. Anhängekupplung nach einem der voranstehenden Ansprüche, **dadurch gekennzeichnet, dass** der Betätigungskörper (52) durch eine Sicherungseinrichtung (170) blockierbar ist.

33. Anhängekupplung nach Anspruch 32, **dadurch gekennzeichnet, dass** der Betätigungskörper (52) durch die Sicherungseinrichtung (170) gegen ein Erreichen seiner inaktiven Stellung blockierbar ist.

34. Anhängekupplung nach Anspruch 32 oder 33, **dadurch gekennzeichnet, dass** die Betätigungsvorrichtung (150) mit einer Sicherungseinrichtung (170) gekoppelt ist.

35. Anhängekupplung nach Anspruch 34, **dadurch gekennzeichnet, dass** die Sicherungseinrichtung (170) eine nicht durch eine Betätigung ausgelöste Bewegung des Betätigungskörpers (52) blockiert.

36. Anhängekupplung nach Anspruch 34 oder 35, **dadurch gekennzeichnet, dass** die Sicherungseinrichtung (170) bei nicht betätigter Betätigungsvorrichtung (150) eine Bewegung des Betätigungskörpers (52) in seine inaktive Stellung blockiert.

37. Anhängekupplung nach einem der Ansprüche 34 bis 36, **dadurch gekennzeichnet, dass** das Antriebselement (152) mit der Sicherungseinrichtüng (170) gekoppelt ist.

38. Anhängekupplung nach Anspruch 37, **dadurch gekennzeichnet, dass** über das Antriebselement (152) die Einwirkung auf den Betätigungskörper (52) und Einwirkung auf die Sicherungseinrichtung (170) aufeinander abgestimmt sind.

39. Anhängekupplung nach Anspruch 38, **dadurch gekennzeichnet, dass** das Antriebselement (152) im Zuge seiner Bewegung von der Ausgangsstellung in eine Zwischenstellung die Sicherungseinrichtung (170) von der Sicherungsstellung in die Entsicherungsstellung überführt.

40. Anhängekupplung nach einem der Ansprüche 37 bis 39, **dadurch gekennzeichnet, dass** das Antriebselement (152) und die Sicherungseinrichtung (170) über eine mechanische Kopplungseinrichtung (190, 192) miteinander gekoppelt sind.

41. Anhängekupplung nach Anspruch 40, **dadurch gekennzeichnet, dass** die mechanische Kopplungseinrichtung mittels einer Kulissenbahn (190) die Einwirkung auf die Sicherungseinrichtung (170) steuert.

## Claims

1. Trailer coupling comprising a ball neck (10) which can be moved between an operating position and a rest position and has a pivot-bearing body (14) disposed at a first end and a coupling ball (18) disposed at a second end, also comprising a vehicle-mounted pivot-bearing unit (20) in which the pivot-bearing body (14) is accommodated such that it can be pivoted about a pivot axis (22) between the operating position (A) and the rest position (R), and further comprising a rotation-blocking device (50) having at least one rotation-blocking body (54), which can be moved in a guide direction (57) with at least one component in the radial direction in relation to the pivot axis (22), it being possible for the rotation-blocking body (54) to be engaged with a receiving space (58, 60) that is located on the pivot-bearing body (14) by movement in the guide direction (57) in order to thereby prevent, in a blocking position, free rotatability of the pivot-bearing body (14), and to be disengaged in order to unblock, in a release position, unimpeded free rotatability of the pivot-bearing body (14) about the pivot axis (22), and the rotation-blocking device further having an actuating body (52) which has a wedge surface running transversely to the guide direction (57), can be moved in an actuating direction and the movement of which in the actuating direction can move, and force, the at least one rotation-blocking body (54) in the guide direction (57), **characterized in that** the rotation-blocking device (50) comprises at least two rotation-blocking bodies (54), **in that** the rotation-blocking bodies (54) are movable by a common actuating body (52) in the respective guide direction (57) from the release position, in which the rotation-blocking bodies (54) penetrate into retraction receiving spaces (62) of the actuating body (52), into the blocking position, and **in that** the pivot-bearing body (14) is provided with a set of first receiving spaces (58), with which the rotation-blocking body (54) can be engaged in the operating position (A), and is provided with a set of second receiving spaces (60), with which the rotation-blocking bodies (54) can be engaged in the rest position (R).

2. Trailer coupling according to Claim 1, **characterized in that** the rotation-blocking device (50) comprises at least three rotation-blocking bodies (54).

3. Trailer coupling according to Claim 1 or 2, **characterized in that** the rotation-blocking bodies (54) are disposed relative to the actuating body (52) such that at least their reaction forces (RK) which are directed transversely to the pivot axis (22) and act on the actuating body (52) compensate one another at least in part.

4. Trailer coupling according to any of the preceding claims, **characterized in that** the rotation-blocking bodies (54) are disposed relative to the actuating body (52) such that at least their reaction forces (RK) which are directed transversely to the pivot axis (22) and act on the actuating body (52) substantially cancel one another.

5. Trailer coupling according to any of the preceding claims, **characterized in that** the rotation-blocking bodies (54) are disposed around the actuating body (52).

6. Trailer coupling according to any of the preceding claims, **characterized in that** the rotation-blocking bodies (54) are disposed substantially symmetrically in relation to a plane running perpendicularly to the pivot axis (22).

7. Trailer coupling according to any of the preceding claims, **characterized in that** at least two of the rotation-blocking bodies (54) interact with the receiving spaces (58, 60) provided for them such that the pivot-bearing body (14) is subjected to torques (90, 92) acting in opposite directions to one another.

8. Trailer coupling according to the preamble of Claim 1 or according to any of the preceding claims, **characterized in that** the rotation-blocking device (50) comprises at least two rotation-blocking bodies (54), **in that** the rotation-blocking bodies (54) are movable by a common actuating body (52) in the respective guide direction (57) from the release position, in which the rotation-blocking bodies (54) penetrate into retraction receiving spaces (62) of the actuating body (52), into the blocking position, and **in that** the actuating body (52') has a direction of actuation (64") extending in the direction of the pivot axis (22).

9. Trailer coupling according the preamble of Claim 1 or according to any of Claims 1 to 7, **characterized in that** the rotation-blocking device (50) comprises at least two rotation-blocking bodies (54), **in that** the rotation-blocking bodies (54) are movable by a common actuating body (52) in the respective guide direction (57) from the release position, in which the rotation-blocking bodies (54) penetrate into retraction receiving spaces (62) of the actuating body (52), into the blocking position, and **in that** the actuating body (52) is arranged to be rotatable about the pivot axis (22).

10. Trailer coupling according to Claim 9, **characterized in that** the actuating body (52) has wedge surfaces (66) which extend over an angular region around the pivot axis (22) and vary in respect of their radial spacing from the pivot axis (22).

11. Trailer coupling according to the preamble of Claim 1 or according to any of the preceding claims, **characterized in that** the rotation-blocking device (50) comprises at least two rotation-blocking bodies (54), **in that** the rotation-blocking bodies (54) are movable by a common actuating body (52) in the respective guide direction (57) from the release position, in which the rotation-blocking bodies (54) penetrate into retraction receiving spaces (62) of the actuating body (52), into the blocking position, and **in that** the at least one rotation-blocking body (54) is guided by a guide body (40) which follows the pivot-bearing body (14) in the radial direction.

12. Trailer coupling according to Claim 11, **characterized in that** the guide body (40) has a guide sleeve (44) with the guiding accommodating region (56) for the respective rotation-blocking body (54).

13. Trailer coupling according to Claim 11 or 12, **characterized in that** a bearing for the actuating body (52) is connected to the guide body (40).

14. Trailer coupling according to any of Claims 11 to 13, **characterized in that** the guide body (40) forms a pivot bearing for the pivot-bearing body (14).

15. Trailer coupling according to any of Claims 11 to 14, **characterized in that** the guide body (40) is part of the vehicle-mounted pivot-bearing unit (20).

16. Trailer coupling according to any of Claims 11 to 15, **characterized in that** the actuating body (52) encloses the guide body (40) and the pivot-bearing body (14') is enclosed by the guide body (40).

17. Trailer coupling according to any of Claims 11 to 15, **characterized in that** the actuating body (52) is enclosed by the guide body (40), and **in that** the pivot-bearing body (14) engages around the guide body (40).

18. Trailer coupling according to the preamble of Claim 1 or according to any of the preceding claims, **characterized in that** the rotation-blocking device (50) comprises at least two rotation-blocking bodies (54), **in that** the rotation-blocking bodies (54) are movable by a common actuating body (52) in the respective guide direction (57) from the release position, in which the rotation-blocking bodies (54) penetrate into retraction receiving spaces (62) of the actuating body (52), into the blocking position, and **in that** the pivot-bearing body (14) forms an outer body which encloses the pivot-bearing unit (20) on the outside and is disposed in relation to the pivot-bearing unit (20) such that it cannot be displaced in the direction of the pivot axis (22).

19. Trailer coupling according to Claim 18, **characterized in that** the first end of the ball neck (10) is attached to the outer body (14).

20. Trailer coupling according to any of the preceding claims, **characterized in that** the actuating body (52) is formed such that, in an inactive position, it allows the release position of the rotation-blocking bodies (54).

21. Trailer coupling according to any of the preceding claims, **characterized in that** the actuating body (52) is formed such that, in an active position, it retains the rotation-blocking bodies (54) in their blocking position.

22. Trailer coupling according to Claim 21, **characterized in that** the actuating body (52) is forced in the direction of its active position by an elastic energy store (102).

23. Trailer coupling according to any of the preceding claims, **characterized in that** the actuating body (52) can be moved from the active position into the inactive position by an actuating arrangement (150).

24. Trailer coupling according to Claim 23, **characterized in that** the actuating body (52) can be moved, by the actuating arrangement (150), counter to the direction in which it is forced by the energy store (102).

25. Trailer coupling according to Claim 23 or 24, **characterized in that** the actuating arrangement (150) can be used to rotate the actuating body (52) counter to the direction of rotation which is brought about by the energy store (102).

26. Trailer coupling according to any of the preceding claims, **characterized in that** the actuating arrangement (150) has a drive element (152) which is coupled to the actuating body (52).

27. Trailer coupling according to Claim 26, **characterized in that** the drive element (152) and the actuating body (52) are coupled to one another via a carry-along coupling device (164, 166; 214, 216).

28. Trailer coupling according to Claim 27, **characterized in that** the carry-along coupling device (164, 166; 214, 216) has a free-travel state, in which there is no carry-along action, and a carry-along state.

29. Trailer coupling according to Claim 28, **characterized in that** the carry-along coupling device (164, 166; 214, 216) is formed such that, starting from a starting position, movement of the drive element (152) brings about movement of the actuating body in an intermediate position, only following passage through the free-travel state and once the carry-along state has been reached.

30. Trailer coupling according to any of Claims 25 to 29, **characterized in that** the actuating arrangement (150) is formed such that it passes automatically into a starting position.

31. Trailer coupling according to Claim 30, **characterized in that** the drive element (152) of the actuating arrangement (150) is forced in the direction of its starting position by an elastic energy store (222).

32. Trailer coupling according to any of the preceding claims, **characterized in that** the actuating body (52) can be blocked by a safety device (170).

33. Trailer coupling according to Claim 32, **characterized in that** the actuating body (52) can be blocked by the safety device (170) against reaching its inactive position.

34. Trailer coupling according to Claim 32 or 33, **characterized in that** the actuating arrangement (150) is coupled to a safety device (170).

35. Trailer coupling according to Claim 34, **characterized in that** the safety device (170) blocks any movement of the actuating body (52) which is not initiated by actuation.

36. Trailer coupling according to Claim 34 or 35, **characterized in that**, when the actuating arrangement (150) is not actuated, the safety device (170) blocks movement of the actuating body (52) into its inactive position.

37. Trailer coupling according to any of Claims 34 to 36, **characterized in that** the drive element (152) is coupled to the safety device (170).

38. Trailer coupling according to Claim 37, **characterized in that** the action to which the actuating body (52) is subjected and the action to which the safety device (170) is subjected are co-ordinated with one another via the drive element (152).

39. Trailer coupling according to Claim 38, **characterized in that**, as it moves from the starting position into an intermediate position, the drive element (152) transfers the safety device (170) from the securing position into the disengaged position.

40. Trailer coupling according to any of Claims 37 to 39, **characterized in that** the drive element (152) and the safety device (170) are coupled to one another via a mechanical coupling device (190, 192).

41. Trailer coupling according to Claim 40, **characterized in that** the mechanical coupling device uses a guide track (190) to control the action to which the safety device (170) is subjected.

## Revendications

1. Attelage de remorque comprenant un col de cygne (10) pouvant être déplacé entre une position de travail et une position de repos avec un corps de palier pivotant (14) agencé à une première extrémité et une boule d'attelage (18) agencée à une deuxième extrémité, une unité de palier pivotant (20) agencée de manière solidaire au véhicule, dans laquelle le corps de palier pivotant (14) est reçu de manière pivotante autour d'un axe pivotement (22) entre la position de travail (A) et la position de repos (R), et un dispositif de blocage en rotation (50) avec au moins un corps de bocage en rotation (54), qui peut être déplacé dans un sens de guidage (57) avec au moins un composant dans le sens radial par rapport à l'axe de pivotement (22), le corps de blocage en rotation (54) pouvant être amené en prise avec un logement (58, 60) agencé sur le corps de palier pivotant (14) par déplacement dans le sens de guidage (57) afin d'empêcher ainsi dans une position de blocage la libre possibilité de rotation du corps de palier pivotant (14), et hors prise afin de libérer dans une position de libération la libre possibilité de rotation du corps de palier pivotant (14) autour de l'axe de pivotement (22), et avec un corps d'actionnement (52) présentant une surface de calage s'étendant transversalement au sens de guidage (57) et mobile dans un sens d'actionnement, par lequel déplacement dans le sens d'actionnement, l'au moins un corps de blocage en rotation (54) peut être déplacé et sollicité dans le sens de guidage (57),
**caractérisé en ce que** le dispositif de blocage en rotation (50) comprend au moins deux corps de blocage en rotation (54), **en ce que** les corps de blocage en rotation (54) peuvent être déplacés dans leur sens de guidage respectif (57) par un corps d'actionnement commun (52), de la position de libération où les corps de blocage en rotation (54) plongent dans des logements de rappel (62) du corps d'actionnement (52), à la position de blocage et **en ce que** le corps de palier pivotant (14) est pourvu d'un jeu de premiers logements (58), avec lesquels les corps de blocage en rotation (54) peuvent être amenés en prise dans la position de travail (A), et avec un jeu de seconds logements (60), avec lesquels les corps de blocage en rotation (54) peuvent être amenés en prise dans la position de repos (R).

2. Attelage de remorque selon la revendication 1, **caractérisé en ce que** le dispositif de blocage en rotation (50) comprend au moins trois corps de blocage en rotation (54).

3. Attelage de remorque selon la revendication 1 ou 2, **caractérisé en ce que** les corps de blocage en rotation (54) sont agencés par rapport au corps d'actionnement (52) de telle sorte qu'au moins leurs forces de réaction (RK) dirigées transversalement à l'axe de pivotement (22) et agissant sur le corps d'actionnement (52) se compensent au moins en partie.

4. Attelage de remorque selon l'une quelconque des revendications précédentes, **caractérisé en ce que** les corps de blocage en rotation (54) sont agencés par rapport au corps d'actionnement (52) de telle sorte qu'au moins leurs forces de réaction (RK) dirigées transversalement à l'axe de pivotement (22) et agissant sur le corps d'actionnement (52) s'annulent pour l'essentiel.

5. Attelage de remorque selon l'une quelconque des revendications précédentes, **caractérisé en ce que** les corps de blocage en rotation (54) sont agencés autour du corps d'actionnement (52).

6. Attelage de remorque selon l'une quelconque des revendications précédentes, **caractérisé en ce que** les corps de blocage en rotation (54) sont agencés de manière essentiellement symétrique par rapport à un plan s'étendant perpendiculairement à l'axe de pivotement (22).

7. Attelage de remorque selon l'une quelconque des revendications précédentes, **caractérisé en ce qu'**au moins deux des corps de blocage en rotation (54) coopèrent avec les logements (58, 60) prévus pour ceux-ci de telle sorte que ceux-ci génèrent des couples (90, 92) à action opposée l'un à l'autre sur le corps de palier pivotant (14).

8. Attelage de remorque selon le préambule de la revendication 1 ou selon l'une quelconque des revendications précédentes, **caractérisé en ce que** le dispositif de blocage en rotation (50) comprend au moins deux corps de blocage en rotation (54), **en ce que** les corps de blocage en rotation (54) peuvent être déplacés dans leur sens de guidage (57) respectif par un corps d'actionnement commun (52), de la position de libération où les corps de blocage en rotation (54) plongent dans des logements de rappel (62) du corps d'actionnement (52), à la position de blocage, et **en ce que** le corps d'actionnement (52') présente un sens d'actionnement (64") s'étendant dans le sens de l'axe de pivotement (22).

9. Attelage de remorque selon le préambule de la revendication 1 ou selon l'une quelconque des revendications 1 à 7, **caractérisé en ce que** le dispositif de blocage en rotation (50) comprend au moins deux corps de blocage en rotation (54), **en ce que** les corps de blocage en rotation (54) peuvent être déplacés dans leur sens de guidage (57) respectif par un corps d'actionnement commun (52), de la position de libération où les corps de blocage en rotation (54) plongent dans des logements de rappel (62) du corps d'actionnement (52), à la position de blocage, et **en ce que** le corps d'actionnement (52) est agencé de manière rotative autour de l'axe de pivotement (22).

10. Attelage de remorque selon la revendication 9, **caractérisé en ce que** le corps d'actionnement (52) présente des surfaces de calage (66) s'étendant autour de l'axe de pivotement (22) sur une plage angulaire et dont la distance radiale par rapport à l'axe de pivotement (22) varie.

11. Attelage de remorque selon le préambule de la revendication 1 ou selon l'une quelconque des revendications précédentes, **caractérisé en ce que** le dispositif de blocage en rotation (50) comprend au moins deux corps de blocage en rotation (54), **en ce que** les corps de blocage en rotation (54) peuvent être déplacés dans leur sens de guidage (57) respectif par un corps d'actionnement commun (52), de la position de libération où les corps de blocage en rotation (54) plongent dans des logements de rappel (62) du corps d'actionnement (52), à la position de blocage, et **en ce que** l'au moins un corps de blocage en rotation (54) est guidé par un corps de guidage (40) se raccordant dans le sens radial au corps de palier pivotant (14).

12. Attelage de remorque selon la revendication 11, **caractérisé en ce que** le corps de guidage (40) présente une douille de guidage (44) avec le logement de guidage (56) pour le corps de blocage en rotation (54) respectif.

13. Attelage de remorque selon la revendication 11 ou 12, **caractérisé en ce qu'**un palier pour le corps d'actionnement (52) est relié au corps de guidage (40).

14. Attelage de remorque selon l'une quelconque des revendications 11 à 13, **caractérisé en ce que** le corps de guidage (40) forme un palier pivotant pour le corps de palier pivotant (14).

15. Attelage de remorque selon l'une quelconque des revendications 11 à 14, **caractérisé en ce que** le corps de guidage (40) fait partie de l'unité de palier pivotant (20) agencée de manière solidaire au véhicule.

16. Attelage de remorque selon l'une quelconque des revendications 11 à 15, **caractérisé en ce que** le corps d'actionnement (52) entoure le corps de guidage (40) et le corps de palier pivotant (14') est entouré par le corps de guidage (40).

17. Attelage de remorque selon l'une quelconque des revendications 11 à 15, **caractérisé en ce que** le corps d'actionnement (52) est entouré par le corps de guidage (40) et **en ce que** le corps de palier pivotant (14) entoure le corps de guidage (40).

18. Attelage de remorque selon le préambule de la revendication 1 ou selon l'une quelconque des revendications précédentes, **caractérisé en ce que** le dispositif de blocage en rotation (50) comprend au moins deux corps de blocage en rotation (54), **en ce que** les corps de blocage en rotation (54) peuvent être déplacés dans leur sens de guidage (57) respectif par un corps d'actionnement commun (52), de la position de libération où les corps de blocage en rotation (54) plongent dans des logements de rappel (62) du corps d'actionnement (52), à la position de blocage, et **en ce que** le corps de palier pivotant (14) forme un corps extérieur entourant l'unité de palier pivotant (20) à l'extérieur, qui est agencé de manière fixe par rapport à l'unité de palier pivotant (20) dans le sens de l'axe de pivotement (22).

19. Attelage de remorque selon la revendication 18, **caractérisé en ce que** la première extrémité du col de cygne (10) est rapportée sur le corps extérieur (14),

20. Attelage selon l'une quelconque des revendications précédentes, **caractérisé en ce que** le corps d'actionnement (52) est réalisé de telle sorte qu'il permet dans une position inactive la position de libération des corps de blocage en rotation (54).

21. Attelage de remorque selon l'une quelconque des revendications précédentes, **caractérisé en ce que** le corps d'actionnement (52) est réalisé de telle sorte qu'il maintient dans une position active les corps de blocage en rotation (54) dans leur position de blocage.

22. Attelage de remorque selon la revendication 21, **caractérisé en ce que** le corps d'actionnement (52) est sollicité par un accumulateur de force élastique (102) dans le sens de sa position active.

23. Attelage de remorque selon l'une quelconque des revendications précédentes, **caractérisé en ce que** le corps d'actionnement (52) peut être déplacé par un dispositif d'actionnement (150) de la position active à la position inactive.

24. Attelage de remorque selon la revendication 23, **caractérisé en ce que** le corps d'actionnement (52) peut être déplacé par le dispositif d'actionnement (150) dans le sens opposé à la sollicitation par l'accumulateur de force (102).

25. Attelage de remorque selon la revendication 23 ou 24, **caractérisé en ce que** le corps d'actionnement (52) peut être tourné avec le dispositif d'actionnement (150) dans le sens opposé au sens de rotation induit par l'accumulateur de force (102).

26. Attelage de remorque selon l'une quelconque des revendications précédentes, **caractérisé en ce que** le dispositif d'actionnement (150) présente un élément d'entraînement (152) qui est couplé avec le corps d'actionnement (52).

27. Attelage de remorque selon la revendication 26, **caractérisé en ce que** l'élément d'entraînement (152) et le corps d'actionnement (52) sont couplés l'un avec l'autre par le biais d'un dispositif d'accouplement d'entraînement (164, 166 ; 214, 216).

28. Attelage de remorque selon la revendication 27, **caractérisé en ce que** le dispositif d'accouplement d'entraînement (164, 166 ; 214, 216) présente un état de libre fonctionnement sans entraînement et un état d'entraînement.

29. Attelage de remorque selon la revendication 28, **caractérisé en ce que** le dispositif d'accouplement d'entraînement (164, 166 ; 214, 216) est réalisé de telle sorte qu'un déplacement de l'élément d'entraînement (152) d'une position de départ après avoir passé l'état de libre fonctionnement et atteint l'état d'entraînement à une position intermédiaire provoque un déplacement du corps d'actionnement.

30. Attelage de remorque selon l'une quelconque des revendications 25 à 29, **caractérisé en ce que** le dispositif d'actionnement (150) est réalisé de telle sorte que celui-ci passe automatiquement à la position de départ.

31. Attelage de remorque selon la revendication 30, **caractérisé en ce que** l'élément d'entraînement (152) du dispositif d'actionnement (150) est sollicité par un accumulateur de force élastique (222) dans le sens de sa position de départ.

32. Attelage de remorque selon l'une quelconque des revendications précédentes, **caractérisé en ce que** le corps d'actionnement (52) peut être bloqué par un dispositif de verrouillage (170).

33. Attelage de remorque selon la revendication 32, **caractérisé en ce que** le corps d'actionnement (52) peut être bloqué par le dispositif de verrouillage (170) contre l'atteinte de sa position inactive.

34. Attelage de remorque selon la revendication 32 ou 33, **caractérisé en ce que** le dispositif d'actionnement (150) est couplé avec un dispositif de verrouillage (170).

35. Attelage de remorque selon la revendication 34, **caractérisé en ce que** le dispositif de verrouillage (170) bloque un déplacement du corps d'actionnement (52) non déclenché par un actionnement.

36. Attelage de remorque selon la revendication 34 ou 35, **caractérisé en ce que** le dispositif de verrouillage (170) bloque, lorsque le dispositif d'actionnement (150) n'est pas actionné, un déplacement du corps d'actionnement (52) dans sa position inactive.

37. Attelage de remorque selon l'une quelconque des revendications 34 à 36, **caractérisé en ce que** l'élément d'entraînement (152) est couplé avec le dispositif de verrouillage (170).

38. Attelage de remorque selon la revendication 37, **caractérisé en ce que** l'effet sur le corps d'actionnement (52) et l'effet sur le dispositif de verrouillage (170) sont coordonnés l'un par rapport à l'autre par le biais de l'élément d'entraînement (152).

39. Attelage de remorque selon la revendication 38, **caractérisé en ce que** l'élément d'entraînement (152) transfère au cours de son déplacement de la position de départ à une position intermédiaire, le dispositif de verrouillage (170) de la position de verrouillage à la position de déverrouillage.

40. Attelage de remorque selon l'une quelconque des revendications 37 à 39, **caractérisé en ce que** l'élément d'entraînement (152) et le dispositif de verrouillage (170) sont couplés l'un avec l'autre par le biais d'un dispositif d'accouplement mécanique (190, 192).

41. Attelage de remorque selon la revendication 40, **caractérisé en ce que** le dispositif d'accouplement mécanique commande l'effet sur le dispositif de verrouillage (170) à l'aide d'une piste de coulisse (190).
